# EUROPÄISCHE PATENTANMELDUNG

(11) **EP 4 620 291 A1**
(43) Veröffentlichungstag der Anmeldung: **24.09.2025**
(21) Anmeldenummer: 24164914.4
(22) Anmeldetag: 20.03.2024
(51) Int. Cl.: A01F 17/00, C09K 3/22

(54) **VORRICHTUNG ZUR BEHANDLUNG EINES FASERHALTIGEN STOFFS MIT EINEM STAUBBINDEMITTEL, EIN ENTSPRECHENDES VERFAHREN SOWIE EIN STAUBBINDEMITTEL**

(71) Anmelder: RRNO-Research GmbH, 37627 Stadtoldendorf (DE)
(72) Erfinder: NOTT, Randolf Bernward, 37627 Stadtoldendorf (DE)
(74) Vertreter: Angerhausen, Christoph

(57) **Zusammenfassung**

Die Erfindung betrifft eine Vorrichtung (1) zur Behandlung eines faserhaltigen Stoffs, bevorzugt Heu oder Stroh, wobei die Vorrichtung aufweist:
- eine Sprühkammer (3), die eine Eintrittsöffnung (4), eine Austrittsöffnung (5) und mindestens einen zwischen der Eintritts- und Austrittsöffnung (4; 5) angeordneten Rotationszerstäuber (6) zum Zerstäuben und Aufsprühen eines Staubbindemittels auf einen faserhaltigen Stoff (2) aufweist;
- eine Zuführeinheit (7), die dazu eingerichtet ist, den faserhaltigen Stoff (2) durch die Eintrittsöffnung (4) in die Sprühkammer (3) einzuführen; und
- eine Auflockerungseinheit (8) zum Auflockern und/oder Zerkleinern des faserhaltigen Stoffs (2); wobei
die Zuführeinheit (7) als Trichter ausgebildet ist. Es werden weiterhin ein entsprechendes Verfahren sowie ein Staubbindemittel beschrieben.

## Beschreibung

Die Erfindung betrifft eine Vorrichtung zur Behandlung eines faserhaltigen Stoffs mit einem Staubbindemittel, ein entsprechendes Verfahren sowie ein Staubbindemittel. Ein Verfahren und eine Vorrichtung zur Behandlung von Heu oder Stroh sind beispielsweise aus der DE 31 07 656 A1, der US 2018/0035692 A1 oder der WO 2018/152649 A1 bekannt.

In der Tierhaltung ist die Staubkontamination der verwendeten Einstreu, beispielsweise des Strohs, ein großes Problem. Besonders ist in der Pferdehaltung bei der Einstreu sowie dem Füttern mit dem Grundfuttermittel Heu mit gravierenden gesundheitlichen Beeinträchtigungen durch Staub zu rechnen. Ebenso treten Staubprobleme in der ökologischen Schweinehaltung, aber auch in der Rinderhaltung durch das als Einstreu verwendete Stroh sehr häufig auf.

Als Aerosole werden im Allgemeinen kleinste Teilchen im festen oder flüssigen Aggregatzustand definiert, welche in einem gasförmigen Medium suspensiveren und durch Zerstäubung oder Pulverisierung von flüssigen oder festen Stoffen entstehen. Bioaerosole sind komplexe luftgetragene Partikel biologischer Herkunft, welche im Allgemeinen in belebte und unbelebte Partikel unterteilt werden. Belebte Partikel stellen dabei die Gesamtheit der Luftinhaltsstoffe mit biologischem Ursprung menschlicher, tierischer, pflanzlicher und mikrobieller Herkunft dar (z. B. Bakterien, Pilze, Viren, Milben, Hefen, Protozoen, Endotoxine). Diese können je nach Herkunft allergische, toxische und infektiöse Reaktionen des Organismus herbeiführen. Stäube stellen den unbelebten Anteil dar und werden als disperse Verteilungen fester Stoffe in Gasen, die durch mechanische Prozesse oder durch Aufwirbelung entstehen können, definiert. Belebte und unbelebte Partikel bilden gemeinsame Agglomerate, wobei ca. 80% der luftgetragenen Mikroorganismen an Partikel angelagert sind. Dieser Zusammenschluss wird auch als Cluster bezeichnet, wobei Staub die Rolle eines Trägers ("Carriers") einnimmt, da sich die belebten Bestandteile des Bioaerosols an die Staubpartikel heften.

Insbesondere für die Gesundheit des Pferdes spielen die physikalischen Partikeleigenschaften eine wichtige Rolle, da die Lunge als eine Art Filter fungiert. Dadurch werden vor allem die Alveolen (die kleinsten Funktionseinheiten des Respirationstraktes) davor bewahrt, mit eingeatmeten Partikeln benetzt zu werden. Obwohl eine Vielzahl der eingeatmeten Partikel durch die Schleimhäute des Respirationstraktes abgeschieden werden, können Partikel abhängig von deren Größe, chemischen Eigenschaften (hydrophil oder hydrophob), Form und Dichte bis in die Alveolen penetrieren (Art T. et al., Environmental Control of Respiratory Disease. Equine Respiratory Diseases, International Veterinary Information Service, New York, 2002).

Die Größe eines Partikels hat eine entscheidende gesundheitliche Relevanz für Mensch und Tier. Partikel können anhand des aerodynamischen Partikeldurchmessers in Fraktionen unterteilt werden. Die Einteilung der Partikel in Fraktionen ist in der Literatur unterschiedlich definiert worden. In der Vergangenheit wurde zwischen Grobstaub (50 - 500 µm), Mittelstaub (10 - 50 µm), Feinstaub (0,5 - 10 µm) und Feinststaub (0,1 - 0,5 µm) unterschieden (Melhorn G., Lehrbuch der Tierhygiene I., Fischer Verlag, Jena, Stuttgart, S. 89-120, 1979).

Eine weitere Einteilung erfolgt in Zusammenhang mit Angaben zu Emissionsfaktoren oder Massenkonzentrationen. Hierbei spricht man von PM (Particulate Matter), wobei beispielsweise PM10 und PM4 alle Partikel beinhalten, die durch eine Trennkurve mit einem Abscheidegrad von 50% unterhalb von 10 µm bzw. 4 µm beschrieben werden. Nach ISO 7708:1995 (Beuth-Verlag, Berlin, Seite 3) ist die PM10-Fraktion mit der thoracalen Fraktion (DIN EN 481:1993, Beuth-Verlag, Berlin, Seite 4) gleichzusetzen.

Über die Auswirkungen erhöhter Schwebstaubkonzentrationen in der Stallluft auf die Gesundheit von Pferden wurden diverse Studien durchgeführt. Die am häufigsten auftretenden, teilweise schon als "Berufskrankheit" von Sportpferden bezeichneten, respiratorischen Erkrankungen stellen COB (chronisch obstruktive Bronchitis - englisch: COPD - chronic obstructive pulmonary disease), RAO (rekurrente Atemwegserkrankung, die nur durch Haltungs- bzw. Futterumstellung oder den Einsatz von Bronchodilatoren beseitigt oder gelindert werden kann) sowie IAD (infektiöse Entzündungen der Atemwege) dar. Dabei ist nicht ausschließlich die Höhe der Schwebstaubkonzentration ausschlaggebend. Die Größe der jeweiligen Partikel hat einen entscheidenden Einfluss auf das respiratorische Erkrankungspotenzial, wobei vor allem die thorakale (PM10) und die alveolare Partikelfraktion (PM4) relevant sind. Partikel dieser Größe können bis in die kleinsten Funktionseinheiten (Alveolen) des Respirationstraktes eindringen und diesen schädigen.

Bitterle (Bitterle E., Oxidative und inflammatorische Mechanismen von Targetzellen des Alveolarepithels nach Exposition mit ultrafeinen Aerosolpartikeln an der Luft-Medium-Grenzschicht, Diss., Technische Universität, München, 2004) beschreibt als Ort der Deposition für Partikel der Größe 10 µm vor allem den Hals-Rachen-Bereich (Impaktion). Auch nach Seedorf und Hartung (Seedorf J. & Hartung J., Stäube und Mikroorganismen in der Tierhaltung, KTBL-Schrift 393, ISBN 3784321453, 2002) wird die Mehrzahl der großen Partikel mit einem Durchmesser > 5 µm durch Impaktion im oberen Bereich des Respirationstraktes abgesondert. Feine Partikel können hingegen in tiefe Regionen des Respirationstraktes eindringen, wobei die feine Fraktion (< 5 µm) durch Sedimentation und Impaktion dort deponiert wird. Nach Art et al. (Art T. et al., Environmental Control of Respiratory Disease, Equine Respiratory Diseases, International Veterinary Information Service, New York, 2002) wird die Mehrzahl an Partikeln der Größe < 0,5 µm durch Expiration aus dem Atemtrakt abgesondert, wobei durch Diffusion kleinere Partikel (< 0,1 µm) von den Bronchiolen in das angrenzende Gewebe gelangen.

Zeitler (Zeitler M.H., Hygienische Bedeutung des Staub- und Keimgehaltes der Stallluft, Sonderdruck aus "Bayerisches Landwirtschaftliches Jahrbuch", Vorträge der XXV. Weihenstephaner Hochschultagung, 65. Jahrgang Hrsg.: TU Weihenstephan, Lehrstuhl für Tierhygiene und Nutztierkunde Weihenstephan. 151-165, 1988) stuft vor allem die von Staubpartikeln transportierten Luftkeime als besonders gefährlich für die Tiergesundheit ein, weil diese infektiöse, toxische oder allergisierende Wirkungen haben können. Die Autorin führt eine mögliche Überlastung der mukoziliären Clearence-Leistungen (unspezifische Abwehrvorgänge der Atemwege des Respirationstraktes) auf die permanente mechanische Reizwirkung von Partikeln zurück. Bei einer Überlastung dieser kann es zur Beeinträchtigung der Zilien (5 - 10 µm lange Zellfortsätze) bis hin zu deren Verlust kommen. Als Konsequenz ergibt sich eine Herabsetzung der Resistenz der Atemwege, wodurch nach Mayr (Mayr A., Infektionskrankheiten, In: Dietz O., Huskamp B. Handbuch Pferdepraxis 2. Auflage, Enke Verlag, Stuttgart, 346-361. ISBN 3432292627, 1999) sogar fakultativ pathogene Keime Krankheitssymptome auslösen und zu unspezifischem Husten führen können.

Verschiedene Studien haben ergeben, dass eine Unbrauchbarkeit des Pferdes für den Reitsport bei über 30% der untersuchten Pferde durch chronische Veränderungen der Atemorgane hervorgerufen wurde. Andere Untersuchungen prognostizieren, dass etwa 80% der in Ställen gehaltenen Pferde symptomatische Schäden der Atemwege aufweisen (McPherson E.A. & Thomson J.R., Chronic obstructive pulmonary disease in the horse: Nature of the disease, Equine Veterinary Journal, 15, 203-206, 1983).

Die bereits eingangs erwähnte RAO (Recurrent Airway Obstruction) ist eine wiederkehrende Atemwegsobstruktion, die einen Reizzustand der Lunge, resultierend aus einer Allergie, darstellt. Hier wird zwischen infektiösen Agenzien (Bakterien, Viren und Lungenparasiten), Umweltantigenen (Schimmelpilzsporen, Pollen, Milben, sowie Staub aus Heu und Stroh) und chemisch-physikalischen Reizen (Schadgase, Staubpartikel) unterschieden. Welcher dieser Faktoren eine übergeordnete Gewichtung zuzuordnen ist, ist bisher nicht eindeutig erforscht worden (Marti E. et al., Beziehung zwischen Atemwegserkrankungen und Allergien beim Pferd, FFP-Fortbildungsveranstaltung zur Pferdegesundheit am 23. & 24. April 2005 in Münster-Handorf. Thema: Immunkrankheiten beim Pferd, 2005), wobei Seedorf und Hartung (Seedorf J. & Hartung J., Stäube und Mikroorganismen in der Tierhaltung, KTBL-Schrift 393, ISBN 3784321453, 2002) den Ursprung der Erkrankung bei einer allergischen Reaktion, primär auf Schimmelpilzsporen und luftgetragene Partikeln aus Heu und Stroh, sehen. Dass die Erkrankung in einem direkten Zusammenhang mit dem Gehalt an luftgetragenen Partikeln steht, konnten McPherson und Thomson (McPherson E.A. & Thomson J.R., Chronic obstructive pulmonary disease in the horse: Nature of the disease, Equine Veterinary Journal, 15, 203-206, 1983) bereits 1983 belegen.

Sowohl luftgetragene Partikel, als auch Schimmelpilzsporen können ursächlich für eine Vielzahl von Erkrankungen des Atemtraktes verantwortlich sein. Dazu zählt z.B. die Luftsackmykose (Entzündung des Luftsackes), welche nach Markus (Markus R.G., Untersuchungen zur Therapie der Luftsackmykose des Pferdes - Ligatur der Arteria carotis interna mittels transendoskopischer Clipapplikation, Diss., Tierärztliche Hochschule Hannover, 2002) primär durch die Schimmelpilzgattungen Aspergillus, Penicillium und Candida hervorgerufen wird. Als Ursache einer akut bis chronisch verlaufenden Entzündung kann nach Franz (Franz C., Der Blick ins Pferd, In: Herbst & Winter 2003/2004, 2003) auch das Eindringen von Fremdkörpern sowie gröberer Staubpartikel angesehen werden. Grabner (Grabner A., Diagnose und Therapie der Luftsackmykose des Pferdes, Tierärztliche Praxis, 2, 10-14, 1987) beschreibt die Ursache für eine Luftsackmykose etwas detaillierter. Er konstatiert, dass der Eintritt der Schimmelpilze durch die Tubenklappen, die sich bei jedem Schluckakt öffnen, verantwortlich sei und vermutet, dass die Besiedlung des Luftsackes sowohl vom Schimmelpilzbefall des Futtermittels als auch von stallspezifischen Bedingungen abhängig wäre.

Untersuchungen der Universität Gent (Jolien Van Cleemput et al., Deoxynivalenol, but not fumonisin B1, aflatoxin B1 or diesel exhaust particles disrupt integrity of the horse's respiratory epithelium and predispose it for equine herpesvirus type 1 infection, Veterinary Microbiology, Band 234, Juli 2019, Seiten 17-24) haben ergeben, dass neben anderen in Heu und Stroh gefundenen Schadstoffen, wie z.B. aerobe mesophile Keime, Hefen, oder Schimmel, Mykotoxine nicht nur von gesundheitlicher Bedeutung für das Tier, sondern auch für die im Stall tätigen Personen sind. Die Untersuchungen haben gezeigt, dass in Heu oder Stroh häufig Toxine wie A-Trichothecene, B-Trichothecene, Fumonisine, oder auch Zerealenon-metaboliten zu finden sind, die zu Schädigungen der Gesundheit von Mensch und Tier führen können.

Die genannten respiratorischen Erkrankungen sind meist nicht vollständig zu heilen. Teure Medikamente und Therapien können nur das Schlimmste verhindern oder die Krankheitssymptome lindern, wobei hohe Kosten für das Behandeln der respiratorischen Erkrankungen anfallen können. Zudem fallen bei jeder Behandlung allgemeine Untersuchungs- und Beratungskosten an. Bei schwereren Eingriffen muss zusätzlich die Unterbringung und Überwachung finanziell honoriert werden.

Gleichermaßen kann auch der Mensch durch die Staubbelastung im Stall gesundheitlich geschädigt werden.

In Bezug auf die Reduzierung luftgetragener Partikel in der Pferdehaltung muss dementsprechend primär die Behandlung der Hauptkontaminationsquellen von Schwebstaub im Vordergrund stehen, welche verschiedene Einstreumaterialien (Weizenstroh, Späne, Flachs, Hanf), Raufuttermittel (Heu, Heulage) und diverse Kraftfuttermittel (Hafer, Gerste, Mischfuttermittel) darstellen.

Bisher gibt es für die Probleme beim Stroh und/oder Heu keine praktikable Problemlösung, abgesehen von der Verwendung alternativer und sehr viel teurerer Einstreumaterialien. Auch in der ökologischen Schweinehaltung mit sog. Tiefstreu (d.h. Stroh) ist das Staubproblem bisher völlig ungelöst. Die gilt sinngemäß auch für die Haltung der sehr viel langlebigeren Rinder. Das Problem verschärft sich auch dadurch, dass die Tiere die Einstreu aufnehmen und viele Stunden darauf ruhen, wobei durch den Atemvorgang der im Stroh enthaltene Staub aufgewirbelt und eingeatmet wird.

Das "Mittel der Wahl" ist derzeit Wasser. Hier dient das Wässern bzw. Benetzen des Heus in erster Linie der Reduzierung des Staubs. Dafür wird Wasser aus einer Gießkanne über das Heu gegossen oder das Heu in Wasser getaucht, um Staubpartikel abzuwaschen und so zu verhindern, dass das Pferd diese beim Fressen einatmet.

Weiterhin bekannt sind Heubedampfer, beispielsweise der mit einem Dampferzeuger arbeitende HAYGAIN Heubedampfer HG-2000. Die Dauer einer Heubedampfung ist abhängig von dem Heutyp, der Heudichte und der Außentemperatur und liegt durchschnittlich zwischen 50 und 60 Minuten. Der HAYGAIN HG-2000 hat eine Kapazität von über 45 Kilo Heu und ist somit für den Einsatz in größeren Betrieben vorgesehen. Ein anderer Heubedampfer ist als "Perfect-Heu Bedampferbox" bekannt und wird mit einem Fassungsvermögen von 300 und 560 Litern angeboten. Es handelt sich im Wesentlichen um eine isolierte Kiste, in die das Heu eingelegt und Dampf injiziert wird. Ein weiterer Heubedampfer mit einem Generator und einem Heucontainer aus Kunststoff wird unter dem Namen "HAY STEAMER" angeboten.

Der Gesundheit von Mensch und Tier abträgliche Mykotoxine können bei hohen Temperaturen stabil sein. Beispielsweise hat Deoxynivalenol eine Temperaturstabilität bis 140° C, wodurch es z.B. bei einer Bedampfung nicht inaktiviert wird.

Allgemein wird zwar durch das Wässern des Heus das Staubproblem zumindest entschärft, jedoch lassen die vorliegenden wissenschaftlichen Arbeiten den Schluss zu, dass durch das Vorhandensein von Pilzsporen und Bakterien hierbei sehr schnell ein Verderb einsetzt. Es werden deshalb im Markt auch Wasserzusätze angeboten. Es empfiehlt sich, mindestens dem Wasser ausreichend Salz zuzusetzen. Allerdings führen derartige Heubewässerungslösungen zu einem nicht unerheblichen Arbeits- und Zeitaufwand für die tägliche Fütterung. Zudem ist das Hantieren mit Wasser im Winter bei Minusgraden ein besonderes Problem, wobei hingegen im Sommer ein mikrobieller Verderb in Abhängigkeit von der Temperatur in kurzer Zeit einsetzen kann.

Neben diesen Möglichkeiten zum Einsatz im Stall bieten auch einige Futtermittelhersteller entstaubtes Heu zum Kauf an. Hier wird in der Regel eine Art Industriestaubsauger eingesetzt, um das Heu zu reinigen, was mit hohen Kosten verbunden ist.

Alternativ ist die Verwendung von Öl bekannt. Dies hat zwar bei Einsatz ausreichender Mengen gewisse staubbindende Effekte, ist jedoch ernährungsphysiologisch problematisch, weil u.a. der Energieeintrag zu einer Gewichtserhöhung (Verfettung) der Tiere führt und leicht auch zu Problemen mit dem Verdauungstrakt führen kann.

Weiterhin bekannt ist die Verwendung entsprechender Netze, in die das Heu verbracht wird und die ein "freies Fressen" praktisch nicht zulassen. Damit soll die Aufnahme von Staub unterlaufen werden. Ähnliches gilt auch für "Heu-Toy" als "alternatives Heu-Netz".

Die DE 10 2020 102 458 B4 offenbart ein Verfahren zur Behandlung eines faserhaltigen Stoffs, insbesondere Stroh oder Heu, mit einem Staubbindemittel mittels einer Vorrichtung, wobei das Verfahren die folgenden Schritte aufweist: Bereitstellen eines Staubpartikel aufweisenden faserhaltigen Stoffs und kontinuierliches Zuführen des faserhaltigen Stoffs durch eine Zuführeinheit der Vorrichtung; Auflockern des faserhaltigen Stoffs durch eine Walze, eine Stachelwalze, einen Häcksler, ein Rührwerk, eine Bürste oder eine beliebige Kombination dieser aufweisende Auflockerungseinheit der Vorrichtung; Aufsprühen eines Staubbindemittels in einer Sprühkammer der Vorrichtung auf den faserhaltigen Stoff, wobei das Staubbindemittel einen Filmbildner auf wässriger Basis aufweist, wobei das Staubbindemittel durch mindestens einen in der Sprühkammer angeordneten Zerstäuber zu Tropfen zerstäubt wird, und wobei das Staubbindemittel dazu eingerichtet ist, Staubpartikel an Fasern des faserhaltigen Stoffs zu binden und/oder eine Clusterbildung der Staubpartikel zu begünstigen; und kontinuierliches Auswerfen des besprühten faserhaltigen Stoffs aus der Vorrichtung durch eine Auswurfeinheit der Vorrichtung.

Allerdings führt dieses Verfahren beziehungsweise die zum Durchführen des Verfahrens offenbarte Vorrichtung zu einer erheblichen Staubbildung, insbesondere im Bereich der Auflockerungseinheit. Weiterhin ist die offenbarte Vorrichtung durch eine hohe Komplexität gekennzeichnet, insbesondere erfordert sie den Einsatz einer Pumpe für die Zuführung des Staubbindemittels.

Es ist daher die Aufgabe der Erfindung eine Vorrichtung und ein entsprechendes Verfahren zur Behandlung eines faserhaltigen Stoffs mit einem Staubbindemittel sowie ein Staubbindemittel selbst bereitzustellen, welche eine kostengünstigere Entstaubung bei zumindest gleichbleibender Staubbindung und eine kompaktere Konstruktion mit geringerem Platzbedarf ermöglicht.

Zur Lösung der oben beschriebenen Problematik wird deshalb eine Vorrichtung nach Anspruch 1 vorgeschlagen, die preisgünstig ist und platzsparend betrieben werden kann. Zudem wird ein entsprechendes Verfahren in Anspruch 21 dargelegt. Anspruch 22 betrifft weiterhin ein Staubbindemittel für die Vorrichtung und/oder das Verfahren. Bevorzugte Ausführungsformen sind Gegenstand der jeweiligen Unteransprüche.

Demgemäß wird eine Vorrichtung zur Behandlung eines faserhaltigen Stoffs, bevorzugt Heu oder Stroh, mit einem Staubbindemittel offenbart, wobei die Vorrichtung eine Sprühkammer aufweist, wobei die Sprühkammer eine Eintrittsöffnung, eine Austrittsöffnung und mindestens einen zwischen der Eintritts- und Austrittsöffnung angeordneten Rotationszerstäuber zum Zerstäuben und Aufsprühen eines Staubbindemittels auf einen faserhaltigen Stoff aufweist, wobei die Vorrichtung eine Zuführeinheit, die dazu eingerichtet ist, den faserhaltigen Stoff durch die Eintrittsöffnung in die Sprühkammer einzuführen, und eine Auflockerungseinheit zum Auflockern und/oder Zerkleinern des faserhaltigen Stoffs aufweist. Die Zuführeinheit ist dabei als ein Trichter ausgebildet.

Dadurch, dass die Zuführeinheit als Trichter ausgebildet ist, kann die Vorrichtung, insbesondere im Vergleich zu einer als Förderband ausgerichteten Zuführeinheit, kompakter, preiswerter und einfacher gestaltet werden. Weiterhin kann eine Staubbildung reduziert werden, beziehungsweise ein Auffangen von Staub, der bei der Auflockerung anfällt, und damit auch ein Abführen kann vereinfacht werden.

Eine kompaktere Gestaltung, insbesondere in horizontaler Ausrichtung, ergibt sich bei Ausführung der Zuführeinheit als Trichter durch die vertikale Zuführungsrichtung des faserhaltigen Stoffs. Zudem kann der faserhaltige Stoff infolge der vertikalen Zuführung vereinfacht über- und/oder nebeneinander zugeführt werden, was bei einer horizontalen Zuführung nur möglich wäre, wenn beispielsweise ein Förderband sehr breit und/oder mit Führungsblechen ausgestaltet wäre, die ein Herunterfallen des über- und/oder nebeneinander zugeführten faserhaltigen Stoffs verhindern. Schließlich bietet insbesondere eine kreisförmige Ausgestaltung des Trichters ein vorteilhaftes Verhältnis von verfügbarem Volumen zu benötigter Außenfläche. Im Vergleich zu einer flächigen, insbesondere flachen, Zuführung kann also eine größere Menge an faserhaltigem Stoff bei einer geringeren, erforderlichen Außenfläche zugeführt werden.

Eine preiswertere sowie vereinfachte Gestaltung ergibt sich daraus, dass kein Antrieb für den Trichter erforderlich ist, wie insbesondere ein Förderband ihn erfordert. Aus dieser verringerten Komplexität können sich verringerte Kosten ergeben, aber auch das Betreiben der Vorrichtung wird vereinfacht. Schließlich kann damit auch eine erhöhte Ausfallsicherheit erreicht werden, da der Trichter nicht einfach ausfallen kann.

Schließlich ermöglicht die Ausführung der Zuführeinheit als Trichter eine Verringerung einer Staubbildung, insbesondere im Bereich der Sprühkammer. Hierzu kann ein Maß einer Verengung des Trichters so ausgelegt sein, dass eine Staubbildung beim Zuführen zumindest teilweise im Trichter anfällt und somit nicht erst in der Sprühkammer entsteht. Damit wird eine Staubbildung zwar nicht insgesamt verringert, der anfallende Staub kann im Trichter allerdings einfacher abgeführt werden. Zudem kann eine Effizienz der eigentlichen Entstaubung in der Sprühkammer erhöht werden, da ein Anteil des im faserhaltigen Stoff enthaltenen Staubs bereits abgeschieden ist und somit in der Sprühammer eine geringere Menge an Staub zu entstauben ist.

Besonders bevorzugt besteht der faserhaltige Stoff im Wesentlichen aus Heu oder Stroh oder weist Heu oder Stroh auf. Allerdings eignet sich die Vorrichtung auch zur Entstaubung anderer faserhaltiger Stoffe, z.B. pflanzlicher, tierischer oder synthetischer faserhaltiger Stoffe wie Gräsern, Kräutern, Blättern, Baumwolle, Wolle, Textilfasern etc.

Die Vorrichtung kann zusätzlich eine Auswurfeinheit aufweisen, die dazu eingerichtet ist, den faserhaltigen Stoff durch die Austrittsöffnung aus der Sprühkammer auszuwerfen.

Die Begriffe "Auswerfen", "auswirft", "ausgeworfen" müssen nicht zwingend bedeuten, dass der faserhaltigen Stoff geschleudert wird, also einer (parabolischen) Flugbahn oder dergleichen folgt. Vielmehr kann auch gemeint sein, dass der faserhaltige Stoff von der Auswurfeinheit aus der Sprühkammer durch die Austrittsöffnung transportiert oder befördert wird.

Zum Anpassen einer Zuführungsgeschwindigkeit und/oder einer Staubbildung bzw. Staubauffangung kann vorgesehen sein, eine Geometrie des Trichters anzupassen. So kann beispielsweise eine Neigung des Trichters angepasst werden und/oder in unterschiedlichen Bereichen des Trichters die Innenweite unterschiedliche Steigungen aufweisen. Weiterhin kann der Trichter gegenüber einer vertikalen Achse gekippt angeordnet sein. Eine solche Neigung gegenüber der vertikalen Achse kann dabei in einem Bereich von 0 bis 15 °, 0 bis 30° oder auch 0 bis 60° liegen. Insbesondere kann der Trichter beweglich ausgeführt sein, so dass eine Neigung entsprechend einer gewünschten Zuführungsgeschwindigkeit einstellbar ist.

Zur Verringerung von aus der Vorrichtung austretendem Staub kann auch vorgesehen sein, dass der Trichter einen oder mehrere falltürartige Einsätze aufweist. Solche Einsätze können einen Rückstellmechanismus, beispielsweise eine Federanordnung, aufweisen, so dass der zumindest eine Einsatz, wenn in den Trichter kein faserhaltiger Stoff aufgegeben wird, eine Einfüllöffnung des Trichters zumindest bereichsweise verschließt. Wird faserhaltiger Stoff in den Trichter aufgegeben, öffnet sich der zumindest eine Einsatz hingegen. Dadurch kann ein Austreten von Staub aus der Einfüllöffnung zumindest reduziert werden.

Weiterhin oder alternativ kann der Trichter eine oder mehrere, umfänglich angeordnete Öffnungen aufweisen, über die anfallender Staub abführbar ist. Insbesondere kann dabei auch vorgesehen sein, dass die eine oder mehreren Öffnungen einen Lüftungs- und/oder Saugmechanismus aufweisen, um ein Abführen des anfallenden Staubs zu vereinfachen.

Durch das Verwenden einer Rotationsdüse ermöglicht die Erfindung zudem, das Staubbindemittel dem Rotationszerstäuber gravimetrisch zuzuführen und auf eine Pumpe zum Bereitstellen des Staubbindemittels zu verzichten. Damit kann eine weitere Vereinfachung und damit eine weitere Kostenreduktion der Vorrichtung erreicht werden.

Der Rotationszerstäuber kann als drucklos arbeitende rotierende Scheibe ausgeführt sein und Tropfen mit einer Tropfengröße von 35 µm erzeugen. Die von dem Rotationszerstäuber erzeugten Tropfen weisen nur eine sehr geringe bis keine Streuung im Tropfenspektrum auf, wodurch eine sehr gute Bedeckung des Materials erreicht wird. Es kann vorgesehen sein, zwei Rotationszerstäuber zu verwenden, die jeweils einen Kreis in einem Umfang entsprechend der Arbeitsbreite der Vorrichtung, z.B. 70 cm, vollflächig besprühen, wodurch sich eine vollständige Benetzung des faserhaltigen Stoffs ergeben kann.

Die Zuführung des faserhaltigen Stoffs kann dabei kontinuierlich erfolgen. Hierzu kann beispielsweise vorgesehen sein, dass eine Verengung des Trichters so ausgelegt ist, dass, abhängig von einer vertikalen Ausrichtung des Trichters, die Menge an der Sprühkammer zugeführtem, faserhaltigem Stoff kleiner ist als das Volumen des Trichters. So kann eine kontinuierliche Zuführung von faserhaltigem Stoff in die Sprühkammer erfolgen, ein Aufgeben von faserhaltigem Stoff in den Trichter kann aber dennoch diskontinuierlich durchgeführt werden.

Alternativ oder zusätzlich kann vorgesehen sein, dass der Querschnitt des Trichters, insbesondere in einem Bereich mit dem geringsten Querschnitt, einstellbar ist. Somit kann ein Volumenstrom an der Sprühkammer zugeführtem faserhaltigen Stoff eingestellt werden.

Die Auflockerungseinheit kann eine Walze, eine Stachelwalze, einen Häcksler, ein Rührwerk, eine Bürste oder eine beliebige Kombination dieser aufweisen. Bevorzugt ist die Auflockerungseinheit in Zuführrichtung vor der Sprühkammer angeordnet. Besonders bevorzugt ist die Auflockerungseinheit in Zuführrichtung vor dem Rotationszerstäuber angeordnet. In einer Ausführungsform ist die Zuführeinheit vor der Sprühkammer angeordnet oder erstreckt sich in die Sprühkammer hinein. In einer anderen Ausführungsform erstreckt sich die Zuführeinheit durch die Sprühkammer hindurch. Die Auswurfeinheit kann in der Sprühkammer oder in Zuführrichtung hinter der Sprühkammer angeordnet sein. Die Auswurfeinheit kann sich auch durch die Sprühkammer hindurch erstrecken. In der Sprühkammer können mehr als ein Rotationszerstäuber angeordnet sein. In einer Ausführungsform sind mindestens zwei Rotationszerstäuber horizontal nebeneinander angeordnet, so dass der faserhaltige Stoff zwischen den Rotationszerstäubern hindurchgeführt werden kann. Die Rotationszerstäuber können auch in einem Gitter, einem Raster und/oder regelmäßig voneinander beabstandet angeordnet sein.

Vorzugsweise umfasst die Vorrichtung eine Aufgabeeinheit, die dazu eingerichtet ist, den faserhaltigen Stoff dem Trichter zuzuführen. Die Aufgabeeinheit kann dabei ausgebildet sein, den faserhaltigen Stoff kontinuierlich und/oder diskontinuierlich dem Trichter zuzuführen. Insbesondere kann die Aufgabeeinheit als ein Heukran ausgebildet sein.

Die Aufgabeeinheit kann eine Aufnahmevorrichtung für Rundballen aus einem Material aufweisend faserhaltigen Stoff aufweisen, wobei die Aufnahmevorrichtung zum Abwickeln des Materials des Rundballens eingerichtet ist. Die Aufnahmevorrichtung kann zum Transportieren des abgewickelten Materials zu dem Trichter eingerichtet sein. Weist die Aufgabeeinheit ein Förderband, eine Walze, ein Walzenpaar, ein Gebläse oder eine schiefe Ebene auf, so kann die Aufnahmevorrichtung auch zur Übergabe an das Förderband, die Walze, das Walzenpaar, das Gebläse oder die schiefe Ebene eingerichtet sein. Die Vorrichtung kann damit sowohl Rundballen als auch Quaderballen aus faserhaltigem Stoff, beispielsweise aus Heu oder Stroh, verarbeiten. Durch die Vorrichtung kann der faserhaltige Stoff unabhängig von seiner Bereitstellungsform (z.B. Rundballen oder Querballen) aufgelockert und mit dem Staubbindemittel besprüht werden.

Vorzugsweise weist die Vorrichtung einen fluidisch mit dem Rotationszerstäuber verbundenen Behälter zur Aufnahme des Staubbindemittels auf, wobei der Behälter austauschbar ausgeführt ist oder ausgebildet ist, ein austauschbares Innenvolumen aufzunehmen. So ermöglicht die Erfindung ein vereinfachtes Nachfüllen von Staubbindemittel, da der Behälter oder das Innenvolumen nicht manuell aufgefüllt werden müssen, sondern der Behälter oder das austauschbare Innenvolumen gewechselt werden können. Der Behälter oder das austauschbare Innenvolumen können dabei wiederbefüllbar ausgeführt sein, so dass der Behälter oder das austauschbare Innenvolumen nach dem Austauschen befüllt und für eine erneute Verwendung bereitgestellt werden können.

Als austauschbares Innenvolumen wird eine grundsätzlich flüssigkeitsundurchlässige Hülle, wie beispielsweise ein Beutel oder ein Gefäß verstanden, das von dem Behälter aufgenommen werden kann und einen Auslauf umfasst, der bevorzugt von einer Außenseite des Behälters zugänglich ist. Eine solche Ausgestaltung aus Behälter und austauschbarem Innenvolumen ermöglicht ebenfalls ein einfaches Nachfüllen des Staubbindemittels, gleichzeitig kann Verpackungsmüll verringert werden, da der Behälter selbst nicht auszutauschen ist.

Der Behälter kann dabei auf oder über der Sprühkammer angeordnet sein. Dadurch ermöglicht die Erfindung, dass zum Versorgen der Rotationszerstäuber mit Staubbindemittel keine Pumpe erforderlich ist. Denn die durch den auf oder über der Sprühkammer angeordneten Behälter bereitgestellte potentielle Energie kann zusammen mit der Zentrifugalkraft des Rotationszerstäubers zum Fördern des Staubbindemittels ausreichen.

Weiterhin kann der Behälter Karton umfassen, so dass eine Menge an Verpackungsmüll, insbesondere im Vergleich zur Verwendung von Kanistern aufweisend Kunstoff und/oder Metall, reduziert werden kann, da der Karton recycelt werden kann. Bevorzugt ist der Behälter als Bag-in-Box Verpackung ausgeführt, so dass er einen Innenbeutel aufweist, beispielsweise aus einem Folienverbundmaterial, der mechanisch durch eine Umverpackung, beispielsweise aufweisend Karton, gestützt ist.

Eine Innenseite des Behälters kann eine flüssigkeitsundurchlässige Beschichtung, insbesondere eine Kunststoffbeschichtung, aufweisen. Weiterhin kann das austauschbare Innenvolumen als ein Beutel ausgeführt ist, insbesondere als ein Kunststoffbeutel.

Vorzugsweise weist die Vorrichtung eine Aufnahmevorrichtung zur Aufnahme des Behälters auf, die eingerichtet ist, den Behälter auf oder über der Sprühzone zu positionieren und den Behälter mit dem Rotationszerstäuber fluidisch zu verbinden. Dadurch kann der Behälter einerseits vorteilhaft positioniert werden, um die Rotationszerstäuber ohne Pumpe mit Staubbindemittel zu versorgen. Andererseits kann so ein einfacher Anschluss des Behälters an die Rotationszerstäuber bereitgestellt werden.

Insbesondere kann vorgesehen sein, dass der Behälter in der Aufnahmevorrichtung durch eine Klemm- und/oder Klippvorrichtung gehalten ist, so dass eine werkzeuglose Positionierung des Behälters möglich ist. Weiterhin kann die Aufnahmevorrichtung zumindest einen mit einem Auslauf des Behälters oder eines in dem Behälter aufgenommenen Innenvolumens verbindbaren Anschluss aufweisen, um den Auslauf und den Rotationszerstäuber fluidisch zu verbinden.

Die Aufnahmevorrichtung kann dabei ein Heizelement aufweisen. Das Heizelement kann ausgebildet sein, das Staubbindemittel in dem Behälter zu temperieren, vorzugsweise auf eine Temperatur in einem Bereich von 20 bis 25° C. Weiterhin kann der Behälter mindestens einen Temperatursensor zur Messung der Temperatur des Staubbindemittels aufweisen.

Vorzugsweise kann die Vorrichtung ein Magnetventil und ein Reduzierstück aufweisen, wobei das Magnetventil und das Reduzierstück ausgebildet sind, den Behälter und den Rotationszerstäuber fluidisch zu verbinden. Das Magnetventil ermöglicht eine verbesserte Steuerung und/oder Regelung des Zuflusses an Staubbindemittel zu dem Rotationszerstäuber. Mittels des Reduzierstücks kann eine Dosierung des Staubbindemittels erfolgen.

Dabei kann die Vorrichtung das Magnetventil und das Reduzierstück zusätzlich oder alternativ zu der Aufnahmevorrichtung aufweisen. Bei einer Kombination der Aufnahmevorrichtung mit dem Magnetventil und dem Reduzierstück kann vorgesehen sein, dass die Aufnahmevorrichtung das Magnetventil und das Reduzierstück aufweist.

Das Reduzierstück kann so ausgelegt sein, dass ein Volumenstrom an Staubbindemittel an dem Rotationszerstäuber zwischen 5 und 50 ml Staubbindemittel pro Minute beträgt, bevorzugt zwischen 15 und 40 ml Staubbindemittel pro Minute, besonders bevorzugt zwischen 20 und 30 ml Staubbindemittel pro Minute.

Vorzugsweise weist die Vorrichtung einen Verbinder zum Verbinden eines Auslaufs des Behälters mit dem Rotationszerstäuber auf. Dabei kann der Verbinder mit dem Auslauf des Behälters kraftschlüssig verbindbar sein und/oder der Verbinder kann ausgebildet ist, den Auslauf des Behälters zu öffnen. So kann der Verbinder beispielsweise auf den Auslauf aufschiebbar sein.

Bevorzugt weist der Verbinder ein Stellelement zum kraftschlüssigen Verbinden mit dem Auslauf des Behälters und/oder zum Öffnen des Auslaufs des Behälters auf. So kann beispielsweise vorgesehen sein, dass mittels des Stellelements der Verbinder nach einem kraftschlüssigen Verbinden durch Aufschieben, Aufstecken oder Anclippen durch das Stellelement an dem Auslauf arretiert werden kann. Alternativ oder zusätzlich kann vorgesehen sein, dass das Stellelement ausgebildet ist, ein Ventil des Auslaufs zu betätigen und so den Auslauf zu öffnen. Das Stellelement kann dabei beispielsweis als eine Stellschraube oder ein Hebel ausgebildet sein.

Bevorzugt ermöglicht der Verbinder gleichzeitig ein kraftschlüssiges Verbinden mit dem Auslauf des Behälters und ein Öffnen des Auslaufs des Behälters. Dadurch kann mittels eines Handgriffs der Behälter mit dem Rotationszerstäuber fluidisch verbunden und die Versorgung des Rotationszerstäubers mit Staubbindemittel gestartet werden.

Weiterhin kann der Verbinder einen Anschluss aufweisen, über den das Staubbindemittel dem Rotationszerstäuber zugeführt werden kann. Hierbei kann vorgesehen sein, den Anschluss mit einer Leitung, insbesondere einem Schlauch, zu verbinden, die wiederum mit dem Rotationszerstäuber verbunden ist. Insbesondere wenn die Vorrichtung zumindest zwei Rotationszerstäuber aufweist, kann vorgesehen sein, ein Verbindungsglied, beispielsweise ein T-Stück, an dem Anschluss zu montieren, so dass mehr als eine Leitung mittels des Verbindungsglieds an den Verbinder angeschlossen werden kann, um die zumindest zwei Rotationszerstäuber mit Staubbindemittel zu versorgen. Es kann alternativ oder zusätzlich vorgesehen sein, dass der Verbinder mehr als einen Anschluss aufweist.

Insbesondere kann vorgesehen sein, dass der Verbinder und/oder die Leitung das Reduzierstück und das Magnetventil umfassen. So kann der Verbinder beispielsweise das Magnetventil im Anschluss aufweisen und das Reduzierstück zumindest abschnittsweise die Leitung bilden. Weiterhin kann vorgesehen sein, dass der Verbinder und die Aufnahmevorrichtung als ein Bauteil ausgebildet sind und/oder die Aufnahmevorrichtung den Verbinder aufweist.

Vorzugsweise weist die Vorrichtung ein Reservoir auf, das mit einem Auslauf des Behälters fluidisch verbindbar ist, und eingerichtet ist, den Auslauf des Behälters mit dem Rotationszerstäuber fluidisch zu verbinden. Das Reservoir ermöglicht auch nach einem Wechsel des Behälters oder des austauschbaren Innenvolumens, dass Staubbindemittel zunächst nur in das Reservoir fließt und noch nicht zu dem Rotationszerstäuber. Erst ab einem bestimmten Füllvolumen des Reservoirs und damit einem erreichten Druck des Staubbindemittels kann ein Auslauf des Reservoirs geöffnet werden, so dass ein Volumenstrom an Staubbindemittel an dem Rotationszerstäuber auch ohne Pumpe oder mit geringer Pumpleistung in einem gewünschten Bereich liegt.

Dabei kann vorgesehen sein, dass die Vorrichtung das Reservoir zusätzlich oder alternativ zu der Aufnahmevorrichtung und/oder dem Magnetventil und dem Reduzierstück aufweist. Insbesondere bei einer Kombination dieser Komponenten kann vorgesehen sein, dass Reservoir und Aufnahmevorrichtung als ein Bauteil ausgebildet sind und Magnetventil und/oder Reduzierstück einen Auslauf dieses Bauteils bilden und oder an dem Auslauf angeordnet sind.

Das Reservoir kann eine rechteckige Grundfläche aufweisen und/oder quaderförmig ausgebildet sein. Weiterhin kann das Reservoir ein Volumen zwischen 0,5 und 3 Litern aufweisen, bevorzugt zwischen 1 und 2,5 Litern, besonders bevorzugt zwischen 1,5 und 2 Litern.

Das Reservoir kann zudem den Verbinder aufweisen. Durch den Verbinder kann ein Anschließen des Behälters an das Reservoir vereinfacht werden, durch die kraftschlüssige Verbindung kann insbesondere eine möglichst tropffreie und damit verlustarme Verbindung zwischen Auslauf des Behälters und Reservoir bereitgestellt werden.

Vorzugsweise weist die Vorrichtung eine Staubabsaugung auf, da im Bereich der Auflockerungseinheit naturgemäß Staub aufgewirbelt wird. Dadurch kann ein unerwünschtes Austreten von Staub aus der Vorrichtung vermieden oder zumindest reduziert werden. Die Staubabsaugung ist dabei bevorzugt in Zuführrichtung vor der Sprühzone angeordnet, besonders bevorzugt im Bereich der Auflockerungseinheit. Somit ermöglicht die Erfindung, Staub, der nicht im Trichter verblieben und/oder dort abgeführt wurde, kontrolliert aus der Vorrichtung abgeführt werden kann. Hierfür kann vorgesehen sein, dass die Staubabsaugung für den Anschluss eines Industriestaubsaugers ausgebildet ist.

Die Vorrichtung kann eine Auswurföffnungsverstellvorrichtung aufweisen, die zur Verstellung der Form und/oder Größe der Austrittsöffnung, bevorzugt der Breite der Austrittsöffnung, eingerichtet ist. Damit kann der Auswurfquerschnitt an die Einführöffnung eines Transportmittels zum Abtransport des besprühten faserhaltigen Stoffs angepasst werden. Beispielsweise kann die Austrittsöffnung durch die Auswurföffnungsverstellvorrichtung von einer rechteckigen Form in eine runde Form, z.B. eine kreisförmige oder ovale, überführt werden. Es kann aber auch vorgesehen sein, die Form der Austrittsöffnung beizubehalten und lediglich die Austrittsfläche zu variieren, beispielsweise durch Verringerung eines Radius oder unter Beibehaltung eines Seitenverhältnisses. In einer Ausführungsform kann die Austrittsöffnung rechteckig oder schlitzförmig sein, wobei durch die Auswurfbreitenverstellvorrichtung die Breite des Rechtecks bzw. des Schlitzes verstellt werden kann. Die Verstellung der Breite kann z.B. manuell oder motorisch durch einen Schieber erfolgen.

Bevorzugt kann die Vorrichtung einen Auffangbehälter zur Zwischenlagerung des mit dem Staubbindemittel behandelten faserhaltigen Stoffs aufweisen, der mit der Sprühkammer über die Austrittsöffnung verbunden sein kann. Besonders bevorzugt kann der Auffangbehälter eine Schließklappe aufweisen, über die mit dem Staubbindemittel behandelter faserhaltiger Stoff entnommen werden kann. Weiterhin bevorzugt kann der Auffangbehälter von der Vorrichtung getrennt werden, so dass ein leichter Austausch von Auffangbehältern ermöglicht wird.

Bevorzugt kann die Zuführeinheit mit der Auswurfeinheit, die Zuführeinheit mit der Auflockerungseinheit und/oder die Auflockerungseinheit mit der Auswurfeinheit identisch sein.

Der Begriff "identisch" bedeutet hier, dass die jeweiligen Einheiten durch denselben Gegenstand und/oder dasselbe Bauteil verwirklicht sind. Ist beispielsweise die Zuführeinheit mit der Auswurfeinheit identisch, dann ist die Auswurfeinheit durch den Trichter gebildet; der Trichter transportiert dann beispielsweise faserhaltigen Stoff in die Sprühkammer, durch die Sprühkammer und aus der Sprühkammer hinaus. In einer Ausführungsform kann die Zuführeinheit mit der Auswurfeinheit identisch sein. In einer anderen Ausführungsform kann die Zuführeinheit mit der Auflockerungseinheit identisch sein. In einer weiteren Ausführungsform kann die Auflockerungseinheit mit der Auswurfeinheit identisch sein. In noch einer weiteren Ausführungsform kann die Zuführeinheit sowohl mit der Auswurfeinheit als auch der Auflockerungseinheit identisch sein.

Vorteilhafterweise kann die Vorrichtung eine Ansteuereinheit zur Steuerung und/oder Regelung der Auswurfeinheit, eines von der Auswurfeinheit ausgeworfenen Massen- oder Volumenstroms des faserhaltigen Stoffs und/oder eines durch den Rotationszerstäuber aufgesprühten Massen- oder Volumenstroms des Staubbindemittels aufweisen. So kann beispielsweise durch Einstellen eines geeigneten Verhältnisses der Massen- oder Volumenströme eine Benetzungszeit des faserhaltigen Stoffs mit dem Staubbindemittel eingestellt werden. Ebenso kann durch die Ansteuereinheit die aufgesprühte Menge Staubbindemittel pro Kilogramm faserhaltigem Stoff eingestellt und/oder variiert werden.

In einer bevorzugten Ausführungsform kann die Eintrittsöffnung der Austrittsöffnung gegenüberliegen, wobei die Auswurfeinheit den von der Zuführeinheit in die Sprühkammer eingeführten faserhaltigen Stoff in Richtung der Austrittsöffnung beschleunigen und durch die Austrittsöffnung auswerfen kann.

Weiterhin wird ein Verfahren zur Behandlung eines faserhaltigen Stoffs, bevorzugt Heu oder Stroh, mit einem Staubbindemittel mittels einer erfindungsgemäßen Vorrichtung vorgeschlagen, das die folgenden Schritte aufweist:
- Bereitstellen eines Staubpartikel aufweisenden faserhaltigen Stoffs und Zuführen des faserhaltigen Stoffs durch eine Zuführeinheit der Vorrichtung;
- Auflockern des faserhaltigen Stoffs durch die Auflockerungseinheit der Vorrichtung; und
- Aufsprühen eines Staubbindemittels in die Sprühkammer der Vorrichtung auf den faserhaltigen Stoff, wobei das Staubbindemittel durch den mindestens einen in der Sprühkammer angeordneten Rotationszerstäuber, bevorzugt zwei Rotationszerstäuber, zu Tropfen zerstäubt wird und wobei das Staubbindemittel dazu eingerichtet ist, Staubpartikel an Fasern des faserhaltigen Stoffs zu binden und/oder eine Clusterbildung der Staubpartikel zu begünstigen.

Besonders bevorzugt besteht der faserhaltige Stoff im Wesentlichen aus Heu oder Stroh oder weist Heu oder Stroh auf. Allerdings kann das Verfahren auch zur Entstaubung anderer faserhaltiger Stoffe, z.B. pflanzlicher, tierischer oder synthetischer faserhaltiger Stoffe wie Gräsern, Kräutern, Blättern, Baumwolle, Wolle, Textilfasern etc. verwendet werden.

Das Zuführen des faserhaltigen Stoffs kann dabei kontinuierlich oder diskontinuierlich erfolgen. Zudem kann nach dem Aufsprühen ein Auswerfen des besprühten faserhaltigen Stoffs aus der Vorrichtung durch die Auswurfeinheit der Vorrichtung erfolgen. Auch das Auswerfen kann kontinuierlich oder diskontinuierlich durchgeführt werden.

Nach dem Bereitstellen des faserhaltigen Stoffs wird der faserhaltige Stoff aufgelockert. Die Auflockerung kann die zu besprühende Oberfläche des faserhaltigen Stoffs vergrößern, insbesondere wenn der faserhaltige Stoff in einer komprimierten Form bereitgestellt wird. So lassen sich z.B. Heu- oder Strohballen beliebiger Form nach der Auflockerung behandeln. Es kann auch vorgesehen sein, dass durch die Auflockerung der faserhaltige Stoff zerkleinert oder aufgebrochen wird.

Nach dem Auflockern wird der faserhaltige Stoff mit einem Staubbindemittel besprüht, wobei das Staubbindemittel zu Tropfen zerstäubt wird. Das Staubbindemittel weist einen Filmbildner auf wässriger Basis auf. Durch das Staubbindemittel können Staubpartikel an Fasern des faserhaltigen Stoffs gebunden werden. Gleichermaßen begünstigt das Staubbindemittel eine Clusterbildung, sowohl von Staubpartikeln als auch von Staubpartikeln und Bioaerosolen. Damit kann die Staubbelastung in der Luft, beispielsweise im Stall, gesenkt werden. Zudem kann z.B. nach dem Auslegen des besprühten faserhaltigen Stoffs ein Aufwirbeln von sich bereits am Boden abgesetztem Staub verringert oder verhindert werden. Mit Clusterbildung kann eine haftende Verbindung zweier oder mehrerer Staubpartikel gemeint sein, z.B. ein Aneinanderhaften mehrerer Staubpartikel oder ein Haften eines Staubpartikels an mindestens einem anderen Staubpartikel, wobei die Haftwirkung durch das Staubbindemittel erzeugt werden kann. Dabei muss nicht zwingend jedes Staubpartikel des gebildeten Clusters an jedem anderen Staubpartikel des Clusters haften. Mit Clusterbildung kann auch gemeint sein, dass beispielsweise ein erstes Staubpartikel an einer Faser des faserhaltigen Stoffs unmittelbar gebunden ist, und ein zweites Staubpartikel an dem ersten Staubpartikel haftend mittelbar an der Faser gebunden ist.

Bevorzugt wird mit dem Staubbindemittel ein Enzym und/oder eine Enzymmischung zum Abbau oder zur Zersetzung von Mykotoxinen aufgesprüht oder weist das Staubbindemittel beim Aufsprühen ein solches Enzym auf. Damit können auch unerwünschte Wirkungen der Schadstoffe (Mykotoxine) im Verdauungstrakt verhindert werden. Denn durch das Staubbindemittel gelangen zwar weniger Partikel in die Lunge, dafür aber vermehrt in den Verdauungstrakt.

Das Staubbindemittel kann vor dem Aufsprühen bei Unterschreiten einer Solltemperatur mit einem Heizelement auf eine Temperatur gleich der Solltemperatur oder größer als die Solltemperatur aufgeheizt werden, wobei die Solltemperatur bevorzugt in einem Bereich von 20°C bis 30 °C, besonders bevorzugt in einem Bereich von 20°C bis 25°C liegen kann, wobei vorzugsweise die Temperatur des Staubbindemittels mit einem Temperatursensor gemessen und das Heizelement basierend auf der von dem Temperatursensor gemessenen Temperatur angesteuert werden kann. Damit kann insbesondere im Winter gewährleistet werden, dass das aufgesprühte Staubbindemittel mindestens die Solltemperatur aufweist. Eine Staubbindemitteltemperatur in einem Bereich von 20 °C bis 25 °C hat sich als vorteilhaft hinsichtlich der Viskosität und der Sprüheigenschaften erwiesen.

Vorteilhafterweise kann während des Aufsprühens das Staubbindemittel mit 5-50 ml/Minute, bevorzugt mit 15 - 40 ml/Minute, besonders bevorzugt mit 20 - 30 ml/Minute aufgesprüht werden. Es kann vorgesehen sein, 80 - 100 ml /10 kg faserhaltigem Stoff einzusetzen.

Weiterhin bevorzugt kann das Staubbindemittel während des Aufsprühens zu Tropfen mit einer Tropfengröße von 20 - 50 µm, bevorzugt von 30 - 40 µm, besonders bevorzugt 35 µm zerstäubt werden. Insbesondere bei dem Aufsprühen des Staubbindemittels auf Heu oder Stroh hat sich eine Tropfengröße von 20 - 50 µm und besonders 35 µm als vorteilhaft für die Benetzung der Fasern erwiesen.

Besonders bevorzugt kann bei dem Aufsprühen des Staubbindemittels ein Filmbildner auf wässriger Basis aufweisend Cassia-Gum E 427, Agar-Agar, Carboxy-Methylcellulose oder eine beliebige Kombination dieser aufgesprüht werden.

Weiterhin wird ein Staubbindemittel für eine erfindungsgemäße Vorrichtung und/oder ein erfindungsgemäßes Verfahren vorgeschlagen, das ein Enyzm und/oder eine Enzymmischung zum Abbau oder zur Zersetzung von Mykotoxinen umfasst.

Das Enzym und/oder die Enzymmischung kann wasserlöslich sein. Die Enzymmischung kann eines oder mehrere Enzyme aufweisen. Die Enzymmischung kann auch weitere Komponenten aufweisen, die keine Enzyme sind. Beispielsweise kann die Enzymmischung aus einem Enzym und Wasser bestehen oder aufweisen. Das Enzym ist bevorzugt für den Verzehr durch Mensch und Tier geeignet, also unschädlich, und/oder kann ein Futtermittelzusatzstoff oder Lebensmittelzusatzstoff sein. Damit verhindert das Staubbindemittel nicht nur das Eindringen von Staubpartikeln in den Respirationstrakt des Tieres (und der Menschen), sondern auch mögliche schädigende Wirkungen im Verdauungstrakt.

Vorzugsweise ist das Enzym und/oder die Enzymmischung zum Abbau oder zur Zersetzung von mindestens einem aus A-Trichothecene, B-Trichotecene, Fumonisine oder Zerealenon-metaboliten eingerichtet. Damit können mögliche Schädigungen der Leber und des Immunsystems z.B. durch Fumonisine vermieden oder reduziert werden.

Weiterhin kann das Staubbindemittel einen Filmbildner auf wässriger Basis aufweisend Cassia-Gum E 427, Agar-Agar, Carboxy-Methylcellulose oder eine beliebige Kombination dieser umfassen. Diese Filmbildner sind als Lebensmittelzusatzstoffe zugelassen. Es können aber auch andere Filmbildner aufgesprüht werden, bevorzugt solche mit Lebensmittelzusatzstoffzulassung und/oder Futtermittelzusatzstoffzulassung. Das Staubbindemittel kann zudem Kohlenhydratgemische und/oder Mischungen aus Monomeren, Dimeren, Oligomeren und Polymeren der Glucose auf wässriger Basis aufweisen.

Das Staubbindemittel kann ein Konservierungsmittel, bevorzugt ein Kaliumsorbat, eine Zitronensäure, einen Zuckerstoff, ein Maltodextrin oder eine beliebige Kombination dergleichen, umfassen. Beispielsweise kann das Staubbindemittel als Filmbildner Cassia-Gum (E 427), Agar-Agar, Caroboxy-Methylcellulose oder eine beliebige Kombination hieraus sowie Kohlenhydratgemische und/oder modifizierte Stärken wie Maltodextrin und/oder Mischungen aus Monomeren, Dimeren, Oligomeren und Polymeren der Glucose auf wässriger Basis mit einer geeigneten Konservierung z.B. aus Kaliumsorbat und Zitronensäure aufweisen.

Vorzugsweise weist das Staubbindemittel eine Viskosität von 20 - 60 mPas, bevorzugt von 30 - 50 mPas, besonders bevorzugt 35 - 45 mPas, auf. Dadurch lässt sich das Staubbindemittel besonders gut zerstäuben.

Im Folgenden soll die Erfindung anhand beispielhafter Ausführungsformen gemäß den beigefügten Figuren näher erläutert werden. Dabei zeigt:
- Fig. 1: ein schematisches Ablaufdiagramm des erfindungsgemäßen Verfahrens zur Behandlung eines faserhaltigen Stoffs mit einem Staubbindemittel;
- Fig. 2: eine erfindungsgemäße Ausführungsform einer Vorrichtung zur Behandlung eines faserhaltigen Stoffs mit einem Staubbindemittel;
- Fig. 3: eine weitere erfindungsgemäße Ausführungsform einer Vorrichtung zur Behandlung eines faserhaltigen Stoffs mit einem Staubbindemittel;
- Fig. 4: erfindungsgemäße Ausführungsformen eines Behälters zur Aufnahme des Staubbindemittels (a) und eines austauschbaren Innenvolumens (b);
- Fig. 5: eine erfindungsgemäße Ausführungsform eines Verbinders mit einem Stellelement; und
- Fig. 6: eine erfindungsgemäße Ausführungsform einer Aufnahmevorrichtung für den Behälter aufweisend ein Reservoir, ein Magnetventil und ein Reduzierstück.

Im Folgenden wird hauptsächlich die Behandlung von Heu mit dem erfindungsgemäßen Staubbindemittel beschrieben. Allerdings soll der faserhaltige Stoff damit nicht auf Heu eingeschränkt werden. Offensichtlich können die nachfolgend beschriebenen Vorrichtungen zum Aufsprühen des Staubbindemittels auch für andere faserhaltige Stoffe, beispielsweise für Stroh verwendet werden. Offensichtlich können mit der Vorrichtung auch andere Fluide aufgesprüht werden.

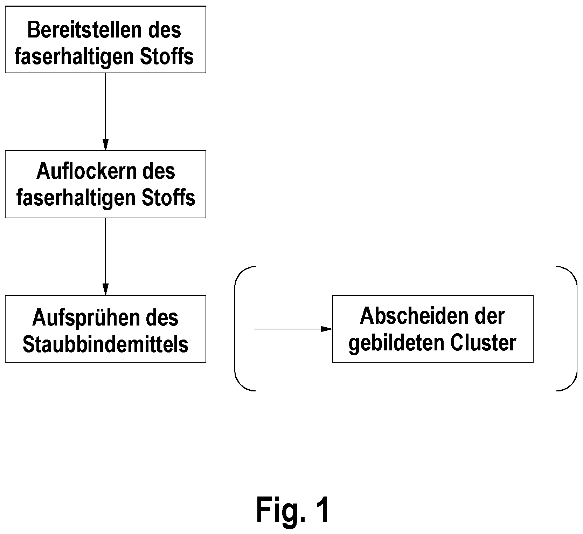

Die Figur 1 zeigt schematisch eine Ausführungsform des erfindungsgemäßen Verfahrens. Zunächst wird der faserhaltige Stoff bereitgestellt. Danach wird der faserhaltige Stoff aufgelockert. Anschließend wird das Staubbindemittel auf den faserhaltigen Stoff aufgesprüht. Das Besprühen erfolgt maschinell mithilfe der weiter unten beschriebenen, erfindungsgemäßen Vorrichtung. Das Staubbindemittel weist bevorzugt einen Filmbildner auf wässriger Basis auf. Durch das auf den faserhaltigen Stoff aufgesprühte Staubbindemittel können Staubpartikel an Fasern des faserhaltigen Stoffs gebunden werden. Damit kann eine Aufwirbelung der an den Fasern gebundenen Staubpartikel verhindert oder zumindest erschwert werden. Zudem können durch das Staubbindemittel Staubpartikel mit kleinerem Durchmesser zu unschädlicheren Clustern mit größerem Durchmesser verbunden werden. Vorzugsweise weist der Filmbildner Cassia-Gum E 427, Agar-Agar, Carboxy-Methylcellulose oder eine beliebige Kombination dieser auf. Besonders bevorzugt ist der Filmbildner als Lebensmittelzusatzstoff und/oder als Futtermittelzusatzstoff zugelassen. Dadurch kann das Staubmittel ungefährlich für Mensch oder Tier sein. Das Staubbindemittel kann von Mensch und Tier problemlos kontaktiert, eingeatmet und/oder sonstwie eingeführt werden. Damit kann sich eine unkomplizierte und einfache Handhabung des Staubbindemittels bzw. der Vorrichtung ergeben, da auf Sicherheitsvorkehrungen wie Atemschutz, Schutzbrillen, Schutzhandschuhe, Sicherheitsschuhe etc. verzichtet werden kann. Vorzugsweise weist das Staubbindemittel und/oder der Filmbildner ein Konservierungsmittel, bevorzugt ein Kaliumsorbat, eine Zitronensäure, einen Zuckerstoff, ein Maltodextrin oder eine beliebige Kombination dergleichen, auf. Das Staubbindemittel kann ein Kohlenhydratgemisch und/oder Mischungen aus Monomeren, Dimeren, Oligomeren und Polymeren der Glucose auf wässriger Basis aufweisen. Das Staubbindemittel kann mit einem Volumenstrom von 60 - 120 ml/Minute, bevorzugt mit einem Volumenstrom von 80 - 100 ml/Minute aufgesprüht werden. Das Staubbindemittel kann mit einer Menge von 5 bis 50 ml/min, bevorzugt mit einer Menge von 15 bis 40 ml/min, besonders bevorzugt mit einer Menge von 20 bis 30 ml/min aufgesprüht werden. Je nach erwarteter Staubmenge, insbesondere der in dem faserhaltigen Stoff bereits vor dem Ausfprühen enthaltenen Staubmenge, Luftqualität, Ort der Verwendung oder sonstiger äußerer Einflüsse kann der faserhaltige Stoff auch mit mehr oder weniger Staubbindemittel besprüht werden. Das Staubbindemittel kann während des Aufsprühens vorzugsweise zu Tropfen mit einer Tropfengröße von 20 - 50 µm, bevorzugt von 20 - 40 µm, besonders bevorzugt 35 µm, zerstäubt werden. Die aufgesprühte Tropfengröße kann aber auch abhängig von der Beschaffenheit, dem Material und der Art des zugeführten faserhaltigen Stoffs gewählt und/oder variiert werden. Für Heu oder Stroh hat sich beispielsweise eine Tropfengröße von 20 - 50 µm, bevorzugt von 20 - 40 µm, als besonders vorteilhaft erwiesen. Das Staubbindemittel kann eine Viskosität von 20 - 60 mPas, bevorzugt von 30 - 50 mPas, besonders bevorzugt 35 - 45 mPas, aufweisen.

Das Staubbindemittel kann ein Enzym oder eine Enzymmischung zum Abbau oder zur Zersetzung von Mykotoxinen aufweisen. Insbesondere kann das Enzym oder die Enzymmischung mindestens eines aus A-Trichothecene, B-Trichotecene (wie z.B. Deoxynivalenol), Fumonisine oder Zerealenon-metaboliten abbauen oder zersetzen. Das Enzym bzw. die Enyzmmischung kann derart gewählt sein, dass auch andere Mykotixine zersetzt werden können. Damit können durch derartige Toxine hervorgerufene Schädigungen an Mensch und Tier, beispielsweise Schädigungen der Leber und des Immunsystems durch Fumonisine, verhindert oder zumindest deutlich verringert werden.

Es kann vorgesehen sein, das Staubbindemittel vor dem Aufsprühen auf eine Solltemperatur von mindestens 20 - 25 °C aufzuheizen. Damit ergeben sich gute Sprüheigenschaften des Staubbindemittels. Es kann aber auch vorgesehen sein, das Staubmittel z.B. abhängig von seiner Zusammensetzung auf eine davon verschiedene Solltemperatur aufzuheizen. Je nach Breitengrad und/oder Jahreszeit kann die Temperatur des Staubbindemittels ohne Aufheizen die Solltemperatur jedoch deutlich unterschreiten. Es kann deshalb vorgesehen sein, das Staubbindemittel in einem mit dem Rotationszerstäuber fluidisch verbundenen Behälter vorzuhalten und mit einem z.B. in dem Behälter angeordneten Heizelement zu beheizen bzw. auf Solltemperatur zu bringen. Das Heizelement kann von einer Steuer- und/oder Reglereinheit, z.B. der Ansteuereinheit, angesteuert werden, wobei die Ansteuerung basierend auf der von einem z.B. in dem Behälter angeordneten Temperatursensor gemessenen Temperatur des Staubbindemittels erfolgen kann. Es kann auch vorgesehen sein, Messdaten eines weiteren Sensors zur Erfassung der Aussentemperatur für die Ansteuerung des Heizelements heranzuziehen.

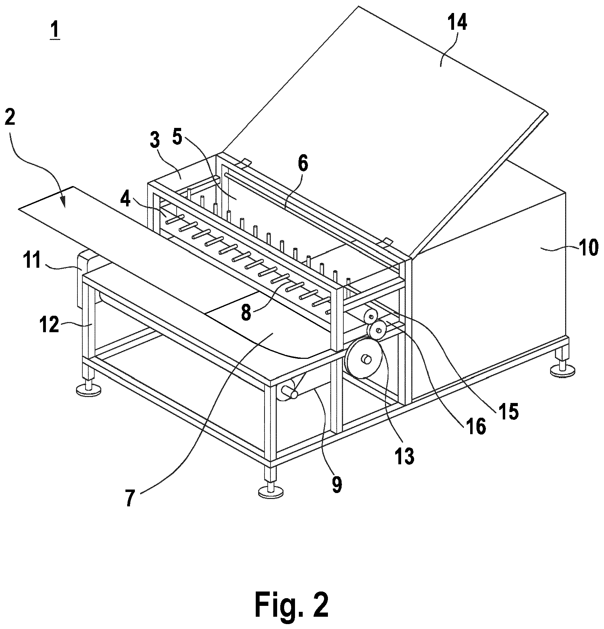

Eine Ausführungsform einer Vorrichtung zur Durchführung des erfindungsgemäßen Verfahrens ist in Figur 2 gezeigt. Die Vorrichtung 1 weist eine als Trichter ausgebildete Zuführeinheit 7, eine Sprühkammer 3, eine Auflockerungseinheit 8 und eine Auswurfeinheit 9 auf. Der bereitgestellte faserhaltige Stoff 2, hier Heu oder alternativ Stroh, wird von der Zuführeinheit 7 der Sprühkammer 3 durch eine Eintrittsöffnung 4 zugeführt. In der Sprühkammer 3 sind die Auflockerungseinheit 8 und zwei Rotationszerstäuber 6 angeordnet. Die Auflockerungseinheit 8 lockert das zugeführte Heu 2 auf. Durch die Rotationszerstäuber 6 wird anschließend das Staubbindemittel auf das aufgelockerte Heu 2 aufgesprüht. Die Auswurfeinheit 9 wirft das Heu 2 durch eine Austrittsöffnung 5 aus der Sprühkammer aus. Beispielsweise kann die Auswurfeinheit 9 das besprühte Heu 2 in einen Auffangbehälter 10 auswerfen. Der Auffangbehälter 10 kann eine Klappe 14 aufweisen. Der Auffangbehälter 10 kann lösbar befestigt sein. Die Auswurfeinheit 9 kann in Auswurfrichtung vor oder hinter dem Rotationszerstäuber 6 angeordnet sein. Der Rotationszerstäuber 6 kann über ein nicht gezeigtes Zuleitungssystem mit einem Staubbindemitteltank verbunden sein. Die Vorrichtung 1 kann eine Ansteuereinheit 11 aufweisen. Die Ansteuereinheit 11 kann die Auswurfeinheit 9 steuern und/oder regeln. Damit kann der Massen- oder Volumenstrom des aus der Sprühkammer 3 ausgeworfenen Heus 2 durch die Ansteuereinheit 11 gesteuert und/oder geregelt werden. In einer anderen Ausführungsform kann die Ansteuereinheit den Rotationszerstäuber 6 und/oder das Zuleitungssystem des Rotationszerstäubers 6 regeln und/oder steuern. Damit kann der Massen- oder Volumenstrom des durch den Rotationszerstäuber 6 aufgesprühten Staubbindemittels durch die Ansteuereinheit 11 gesteuert und/oder geregelt werden. In einer weiteren Ausführungsform kann die Ansteuereinheit 11 den Massen- oder Volumenstrom sowohl des aus der Sprühkammer 3 ausgeworfenen Heus 2 als auch des aufgesprühten Staubbindemittels steuern und/oder regeln. Durch die Ansteuereinheit 11 kann somit die Benetzungsmenge des Heus 2 mit dem Staubbindemittel und/oder die Benetzungsdauer gesteuert und/oder geregelt werden. Die Sprühkammer 3 kann einen Bodensprinkler 15 aufweisen. Dadurch kann das Heu auch von unten mit dem Staubbindemittel besprüht werden. Die Sprühkammer 3 kann einen Abfluss 16 oder dergleichen, wie beispielsweise ein Sieb, aufweisen.

Bei der in Figur 2 gezeigten Ausführungsform ist die Auflockerungseinheit 8 durch eine Stachelwalze ausgebildet. Zudem ist für diese Ausführungsform die Auswurfeinheit 9 durch ein Förderband ausgebildet. Bei dieser Ausführungsform sind, wie in Figur 2 gezeigt, die Rotationszerstäuber 6 bei der Austrittsöffnung 5 angeordnet. Das Förderband 9 erstreckt sich in Zuführrichtung in die Sprühkammer 3 hinein, aber nicht über die Rotationszerstäuber 6 hinaus; wie in Figur 2 gezeigt ist hier damit die Auswurfeinheit 9 in Auswurfrichtung vor den Rotationszerstäubern 6 angeordnet. Das Förderband kann durch die Ansteuereinheit 11 gesteuert und/oder geregelt werden. Insbesondere kann durch die Ansteuereinheit die Zuführgeschwindigkeit, das heißt hier die Laufgeschwindigkeit des Förderbands, gesteuert und/oder geregelt werden. Bevorzugt ist die Ansteuereinheit 11 ein Elektromotor.

Bei der in Figur 2 dargestellten Ausführungsform ist die Stachelwalze über ein Getriebe 13 mit dem Förderband mechanisch verbunden. Es kann alternativ vorgesehen sein, das im Bereich der Sprühkammer 3, also in Zuführrichtung nach der Auflockerungseinheit 8, für den Weitertransport eingebaute Förderband 9 mit einem eigenen Elektromotor anzutreiben, der elektrisch mit dem Antrieb der Auflockerungseinheit 8 synchronisiert sein kann. Das Übersetzungsverhältnis des Getriebes 13 kann bevorzugt so gewählt sein, dass die Tangentialgeschwindigkeit der Oberfläche der Stachelwalze 8 größer als die Vorschubgeschwindigkeit des Förderbands 9 sein kann. Damit kann eine besonders gute Auflockerung des zugeführten Heus 2 erzielt werden. Allerdings können offensichtlich auch beliebige andere Übersetzungsverhältnisse des Getriebes 13 gewählt werden. Bei der in Figur 2 gezeigten Ausführungsform ist die Anzahl der Stufen des Getriebes 13 derart gewählt, dass die Stachelwalze 8 sowie die Rollen des Förderbands 9 die gleiche Drehrichtung haben. Dadurch wird die auf das zugeführte Heu 2 zwischen Stachelwalze 8 und Förderband 9 einwirkende Scherkraft vergrößert, so dass sich eine besonders gute Auflockerung ergibt. Durch kontinuierliches Zuführen von Heu 2 in die Sprühkammer 3 wird bereits aufgelockertes Heu zu den Rotationszerstäubern 6 transportiert und besprühtes Heu durch die Austrittsöffnung 5 ausgeworfen.

In einer anderen Ausführungsform ist das Getriebe 13 derart ausgelegt, dass die Stachelwalze 8 und die Rollen des Förderbands 9 eine entgegengesetzte Drehrichtung haben. Dadurch kann das von dem Trichter 7 zugeführte Heu 2 durch die Stachelwalze 8 aufgelockert und in Zuführrichtung beschleunigt werden. Sind die Eintrittsöffnung 4 und die Austrittsöffnung 5 einander gegenüberliegend angeordnet (vgl. z.B. Figur 2), so kann das durch die Stachelwalze 8 beschleunigte Heu 2 unter den Rotationszerstäubern 6 hindurch und durch die Austrittsöffnung 5 geschleudert werden; die Stachelwalze 8 (Auflockerungseinheit 8) kann damit der Auswurfeinheit 9 entsprechen.

In einer anderen Ausführungsform kann auch vorgesehen sein, dass die Auflockerungseinheit 8 nicht mit der Zuführeinheit 7 und/oder der Auswurfeinheit 9 verbunden oder gekoppelt ist. Vorzugsweise kann die Auflockerungseinheit 8 unabhängig von der Zuführeinheit 7 und/oder der Auswurfeinheit 9 angetrieben werden. Dadurch ist beispielsweise die Drehrichtung und Drehgeschwindigkeit der Stachelwalze 8 steuer- und/oder regelbar.

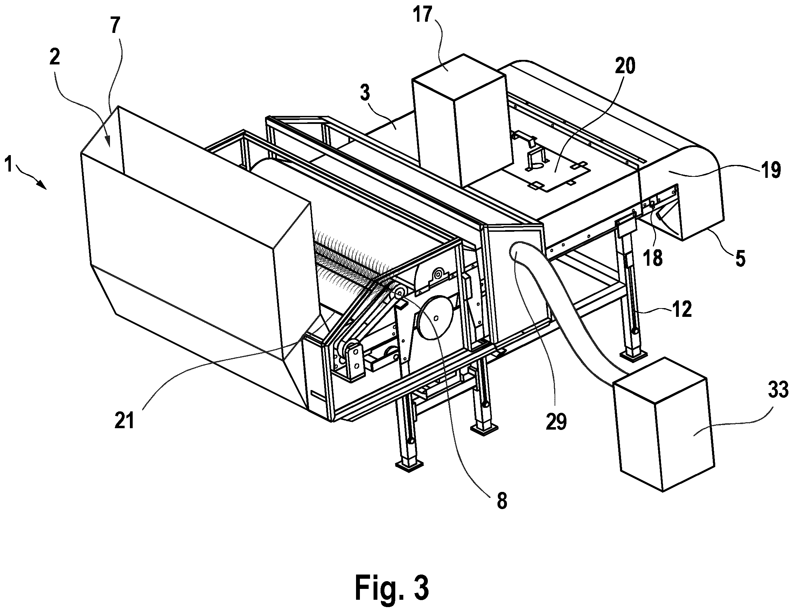

Eine weitere Ausführungsform einer Vorrichtung zur Durchführung des erfindungsgemäßen Verfahrens ist in Figur 3 gezeigt. Die abgebildete Vorrichtung 1 weist eine als Trichter ausgebildete Zuführeinheit 7, eine Auflockerungseinheit 8, eine Sprühkammer 3 und eine Auswurfeinheit 9 auf. Die Auflockerungseinheit 8 weist eine Stachelwalze auf. Es kann auch vorgesehen sein, dass die Auflockerungseinheit 8 mehrere z.B. hintereinander angeordnete Stachelwalzen aufweist. Ebenso wie die in Figur 2 gezeigte Ausführungsform kann auch die in Figur 3 gezeigte Ausführungsform der Vorrichtung 1 kontinuierlich faserhaltiges Material, z.B. Heu oder Stroh, der Auflockerungseinheit 8 und der Sprühkammer 3 zuführen und kontinuierlich besprühtes faserhaltiges Material auswerfen. Die in Figur 3 gezeigte Ausführungsform kann dabei derart dimensioniert sein, dass innerhalb von zwei Minuten eine Tagesration Heu für ein Großpferd (ca. 10 kg Heu) vollständig aufgelockert und besprüht ist.

Bei der in Figur 3 dargestellten Ausführungsform weist die Auswurfeinheit 9 ein Förderband 9 auf. Der Trichter 7 führt zu besprühenden faserhaltigen Stoff, insbesondere Heu, durch die Auflockerungseinheit 8 hindurch in die Sprühkammer 3 hinein und das Förderband 9 transportiert das besprühte Heu weiter zu einem optionalen Umlenkstück 19. Bei der in Figur 3 gezeigten Ausführungsform ist dabei die Auflockerungseinheit 8 entgegen der Transportrichtung des Förderbands 9 vor der Sprühkammer 3 angeordnet. Insbesondere kann die Eintrittsöffnung 4 der Sprühkammer 3 der Auflockerungseinheit 8 in Zuführrichtung nachgeordnet sein, so dass der faserhaltige Stoff wie in Figur 3 gezeigt vor Eintritt in die Sprühkammer aufgelockert ist, während hingegen der faserhaltige Stoff gemäß Figur 2 in der Sprühkammer aufgelockert wird. Ebenso wie bei der in Figur 2 gezeigten Ausführungsform verläuft das Förderband 9 im Wesentlichen in der horizontalen Ebene und/oder parallel zur Aufstellfläche der Vorrichtung 1. Die Stachelwalze 8 kann dabei mit dem Antrieb des Förderbands 9 über ein Getriebe 13 mechanisch gekoppelt sein. Es kann aber auch vorgesehen sein, dass Stachelwalze 8 und Förderband 9 voneinander unabhängig gesteuert und bewegt werden können. Die Zuführeinheit 7 kann eine nicht in Figur 2 und 3 gezeigte Aufnahmevorrichtung für Rundballen aufweisen, mittels der die Rundballen abgewickelt werden können. Damit kann die Vorrichtung 1 auch in Rundballenform vorliegendes faserhaltiges Material, insbesondere Heu oder Stroh, verarbeiten bzw. besprühen.

Das in Figur 3 gezeigte Umlenkstück 19 kann mit der Sprühkammer 3 lösbar verbunden sein. Es kann aber auch, wie bei der in Figur 3 gezeigten Vorrichtung 1, vorgesehen sein, dass das Umlenkstück 19 nicht lösbar mit der Sprühkammer 3 verbunden oder ein fester Bestandteil der Sprühkammer ist. In diesem Falle kann die Austrittsöffnung des Umlenkstücks 19 der Austrittsöffnung 5 der Sprühkammer 3 entsprechen oder als solche aufgefasst werden. In einer Ausführungsform kann das Umlenkstück 19 aber auch Teil der Auswurfeinheit 9 sein oder die Auswurfeinheit 9 das Umlenkstück aufweisen. Die Eintrittsöffnung 4 der Sprühkammer 3 kann im Wesentlichen senkrecht zur horizontalen Ebene und die Austrittsöffnung 5 im Wesentlichen parallel zur horizontalen Ebene ausgerichtet sein. Je nach Auslegung des Umlenkstücks 19 kann das besprühte Heu aber auch in eine oder mehrere andere Richtungen aus der Vorrichtung 1 ausgeworfen werden.

Ebenso wie die in Figur 2 gezeigte Ausführungsform führt auch die in Figur 3 gezeigte Ausführungsform der Vorrichtung 1 kontinuierlich Heu über die Zuführeinheit 7 der Auflockerungseinheit 8 und der Sprühkammer 3 zu. Damit wird auch kontinuierlich mit dem Staubbindemittel besprühtes Heu durch die Auswurfeinheit 9 ausgeworfen bzw. in der in Figur 3 gezeigten Ausführungsform durch das Förderband 9 in das Umlenkstück 19 transportiert. Das besprühte Heu fällt anschließend in der in Figur 3 gezeigten Ausführungsform unter Einfluss der Schwerkraft nach unten aus dem Umlenkstück 19.

Die Vorrichtung 1 kann wie in Figur 3 gezeigt eine Auswurföffnungsverstellvorrichtung 18 aufweisen, mittels derer die Austrittsöffnung 5 der Sprühkammer 3 oder des Umlenkstücks 19 variiert werden kann. Bei der in Figur 3 gezeigten Ausführungsform weist die Auswurföffnungsverstellvorrichtung 18 einen an einer Außenseite der Vorrichtung 1 angeordneten manuell betätigbaren Schieber auf, so dass bei Betätigen des Schiebers die Breite der Austrittsöffnung 5 der Sprühkammer 3 und/oder des Umlenkstücks 19 vergrößert oder verkleinert wird.

Weiterhin weist die Vorrichtung 1 in Figur 3 eine Staubabsaugung im Bereich der Sprühzone 3 auf. Diese ist als Industriestaubsauger ausgebildet und kann in der Sprühzone 3 auftretenden Staub absaugen, so dass eine Staubbelastung der Umgebung der Vorrichtung 1 reduziert werden kann.

Die in Figur 3 gezeigte Ausführungsform der Vorrichtung 1 weist zudem einen Behälter 17 auf, der mit den nicht in der Figur gezeigten Rotationszerstäubern fluidisch verbunden ist. In dem Behälter 17 kann das aufzusprühende Staubbindemittel vorgehalten bzw. gelagert werden. Der Behälter 17 ist hier austauschbar ausgeführt, alternativ kann er ausgebildet sein, ein austauschbares Innenvolumen aufzunehmen. Dabei ist der Behälter 17 auf oder über der Sprühkammer 3 angeordnet.

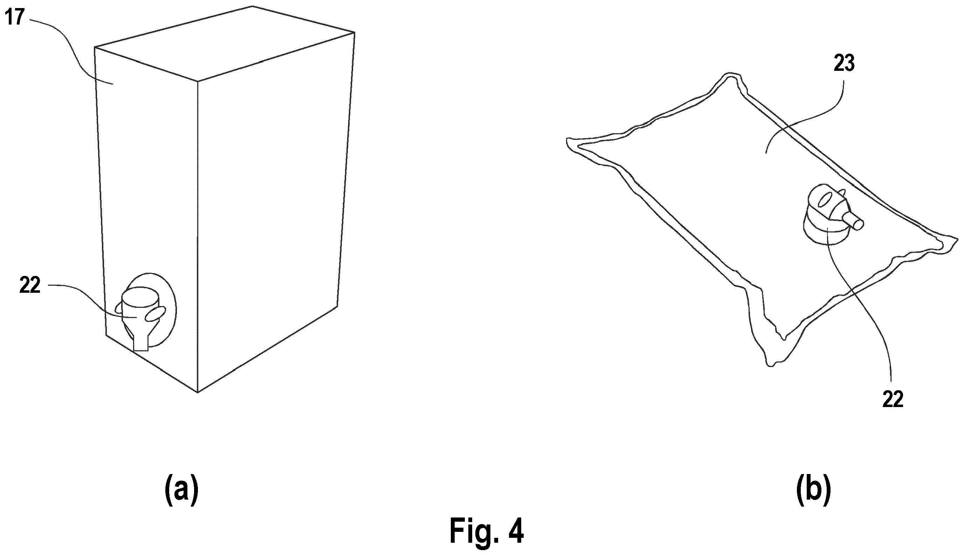

Der Behälter 17 umfasst hier eine Umverpackung aus Karton und ein Innenvolumen, das als Innenbeutel aus einem Folienverbundmaterial ausgebildet ist. Der Behälter 17 ist, wie in Fig. 4 (a) gezeigt, als Bag-in-Box Verpackung ausgebildet. Der Behälter weist dabei auch einen Auslauf 22 zur Versorgung der Rotationszerstäuber mit Staubbindemittel auf.

Der Behälter 17 kann ein Heizelement sowie zusätzlich einen Temperatursensor aufweisen. Sowohl der Temperatursensor als auch das Heizelement können in dem Behälter angeordnet sein. Der Temperatursensor und das Heizelement können mit einer Steuer- und/oder Reglereinheit verbunden sein, so dass das Heizelement basierend auf den Messwerten des Temperatursensors angesteuert wird. Damit kann das Staubbindemittel in dem Behälter 17 durch Beheizen mit dem Heizelement auf eine Solltemperatur gebracht oder gehalten werden. Dem Behälter 17 kann ferner eine nicht dargestellte Dosierpumpe zum Regulieren der Menge an aufzusprühendem Staubbindemittel zugeordnet sein.

Vorzugsweise sind die zwei Rotationszerstäuber der in Figur 3 gezeigten Ausführungsform als drucklos arbeitende rotierende Scheiben ausgebildet sind und benetzen vollständig einen Kreis entsprechend der Arbeitsbreite der Vorrichtung 1 mit dem Staubbindemittel. Wie in Figur 3 gezeigt kann die Sprühkammer 3 eine von außerhalb der Vorrichtung 1 zugängliche Klappe 20 aufweisen. Bei geöffneter Klappe 20 können die in der Sprühkammer 3 angeordneten Rotationszerstäuber zur Montage bzw. Demontage oder Wartungszwecken gut zugänglich sein. Die Vorrichtung 1 kann einen Fangschutz 21 aufweisen, der von der Auflockerungseinheit 8 aufgewirbeltes faserhaltiges Material, z.B. Heu oder Stroh, auffangen kann bzw. ein Herausschleudern aus der Vorrichtung 1 verhindern kann.

In einer nicht gezeigten Ausführungsform der Vorrichtung 1 kann die Vorrichtung 1 zum Beladen des Trichters 7 mit faserhaltigem Stoff eine Aufgabeeinheit umfassen, die dazu eingerichtet ist, den faserhaltigen Stoff dem Trichter 7 zuzuführen. Die Aufgabeeinheit kann dabei beispielsweise als ein Heukran ausgeführt sein.

Fig. 4 (b) zeigt eine beispielhafte Ausführung eines als Kunststoffbeutel ausgeführten austauschbaren Innenvolumens 23. So kann ein Austausch des Kunststoffbeutels vorgenommen werden, um Staubbindemittel nachzufüllen, ohne dass der Behälter 17 selbst ausgetauscht werden muss. Der Kunststoffbeutel weist auch einen Auslauf 22 auf, so dass in dem Behälter 17 lediglich eine entsprechende Aussparung vorzusehen ist.

In einer nicht gezeigten Ausführungsform kann eine Innenseite des Behälters 17 eine flüssigkeitsundurchlässige Beschichtung, insbesondere eine Kunststoffbeschichtung, aufweisen. Dies ist insbesondere vorteilhaft, wenn der Behälter aus flüssigkeitsdurchlässigem Material, wie beispielsweise Karton, hergestellt ist oder dieses zumindest teilweise umfasst und kein separates Innenvolumen aufweist.

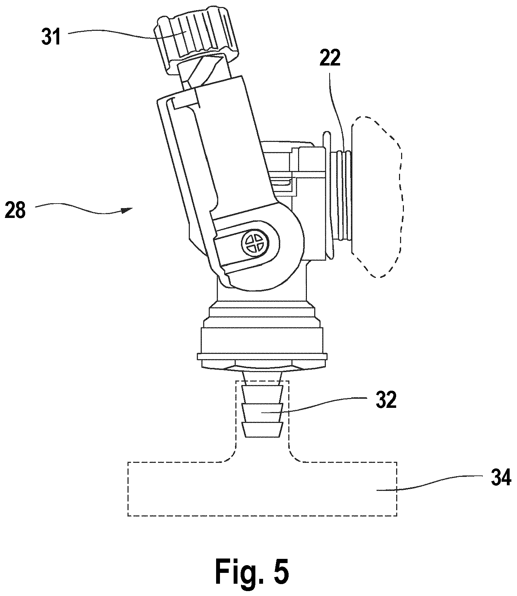

Figur 5 zeigt einen Verbinder 28 zum Verbinden eines Auslaufs 22 des Behälters 17 mit den Rotationszerstäubern 6. Der Verbinder 28 ist dabei durch Aufschieben mit dem Auslauf 22 des Behälters 17 kraftschlüssig verbindbar. Weiterhin weist der Verbinder 28 hier ein als Stellschraube ausgebildetes Stellelement 31 zum Öffnen eines Ventils 29 des Auslaufs 22 des Behälters auf. Die Stellschraube ist dabei an einem beweglichen Hebel angeordnet, der ein Positionieren der Stellschraube über dem Ventil 29 ermöglicht.

Der Verbinder 28 umfasst zudem einen Anschluss 32, über den Staubbindemittel den Rotationszerstäubern 6 zugeführt werden kann. Hier ist der Verbinder 28 ausgebildet, zwei Rotationszerstäuber 6 mit Staubbindemittel zu versorgen, indem an den Anschluss 32 ein T-Stück 34 montiert ist, an das wiederum Schläuche zum Verbinden mit den Rotationszerstäubern 6 angeschlossen sein können.

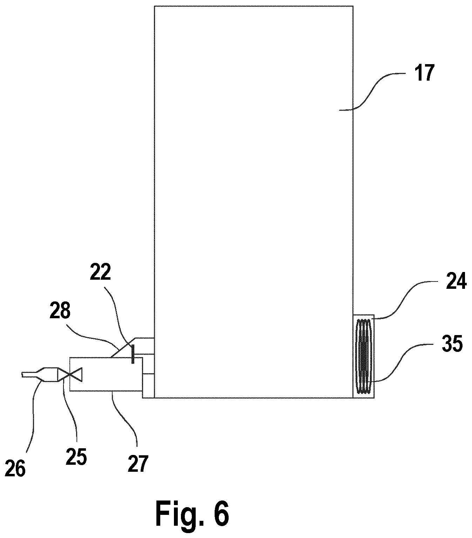

Figur 6 zeigt eine Aufnahmevorrichtung 24 einer Vorrichtung 1, wie in den Figuren 3 und 4 gezeigt, zur Aufnahme des Behälters 17, die eingerichtet ist, den Behälter 17 auf oder über der Sprühzone 3 zu positionieren und den Behälter 17 mit dem Rotationszerstäuber 6 fluidisch zu verbinden. Hierzu umfasst die Aufnahmevorrichtung 24 ein Reservoir 27, einen Verbinder 28 sowie ein Magnetventil 25 und ein Reduzierstück 26. Weiterhin weist die Aufnahmevorrichtung 24 hier ein Heizelement 35 zum Temperieren des in dem Behälter 17 vorgehaltenen Staubbindemittels auf.

Das Reservoir 27 ist mit einem Auslauf 22 des Behälters 17 fluidisch verbindbar und weist hierzu den Verbinder 28 auf. Der Verbinder 28 ist eingerichtet, mittels des Stellelements 31 den Auslauf 22 des Behälters 17 mit dem Reservoir kraftschlüssig zu verbinden und gleichzeitig den Auslauf 22 des Behälters 17 zu öffnen. Das Stellelement 31 ist hier als ein Hebel mit Stellschraube ausgebildet, so dass durch Bewegen des Stellelements 28 über den Auslauf 22 und Drehen der Stellschraube, der Auslauf 22 in dem Reservoir 27 gesichert werden und ein Ventil 29 des Auslaufs 22 geöffnet werden kann. So kann mittels eines Handgriffs der Behälter 17 fluidisch verbunden und ein Befüllungsvorgang des Reservoirs 27 gestartet werden.

Das Reservoir 27 weist hier eine rechteckige Grundfläche auf und ist quaderförmig ausgebildet. Ein Volumen des Reservoirs 27 kann zwischen 1 und 10 Litern aufweisen, bevorzugt zwischen 2 und 8 Litern, besonders bevorzugt zwischen 3 und 5 Litern. Das Reservoir kann auch ein nicht gezeigtes Entlüftungsventil aufweisen, so dass beim Befüllen des Reservoirs 27 Gase entweichen können, um eine Blasenbildung bei der Zuführung des Staubbindemittels zu vermeiden oder zumindest zu reduzieren.

Das Magnetventil 25 und das Reduzierstück 26 sind ausgebildet, den Behälter 17 über das Reservoir 27 und den Rotationszerstäuber 6 fluidisch zu verbinden. Hierzu ist das Magnetventil 25 hier in einer Umwandung des Reservoirs 27 aufgenommen. Das Reduzierstück 26 schließt unmittelbar an das Magnetventil 25 an. Das Reduzierstück kann so ausgelegt sein, dass ein Volumenstrom an Staubbindemittel an dem Rotationszerstäuber 6 zwischen 5 und 50 ml Staubbindemittel pro Minute beträgt, bevorzugt zwischen 15 und 40 ml Staubbindemittel pro Minute, besonders bevorzugt zwischen 20 und 30 ml Staubbindemittel pro Minute.

Die Aufnahmevorrichtung 24 kann ausgebildet sein, mehrere Rotationszerstäuber 6 mit Staubbindemittel zu versorgen. Hierzu kann das Reduzierstück 26 selbst oder ein anschließendes Rohr oder ein anschließender Schlauch eine Verzweigung, beispielsweise als T-Stück, aufweisen. Alternativ oder zusätzlich kann das Reservoir in der Umwandung mehrere Magnetventile 25 aufweisen.

Die Aufnahmevorrichtung 24 kann zudem ein Heizelement aufweisen. Das Heizelement kann ausgebildet sein, das Staubbindemittel in dem Behälter 17 zu temperieren, vorzugsweise auf eine Temperatur in einem Bereich von 20 bis 25° C. Das Heizelement kann mit einer Steuer- und/oder Reglereinheit verbunden sein, so dass das Heizelement, vorzugsweise basierend auf Messwerten eines Temperatursensors angesteuert wird.

In einer anderen nicht gezeigten Ausführungsform kann sich das Förderband in Vorschubrichtung durch die Sprühkammer bis zur Austrittsöffnung oder darüber hinaus erstrecken.

In einer anderen nicht gezeigten Ausführungsform kann die Auflockerungseinheit in Zuführrichtung vor der Sprühkammer angeordnet sein.

Die Rotationszerstäuber können an einer beliebigen Position in der Sprühkammer oder einer beliebigen Innenseite der Sprühkammer angeordnet sein. Bevorzugt kann zumindest einer der Rotationzerstäuber bei der Austrittsöffnung angeordnet sein. Es können mehrere Rotationszerstäuber in einem Muster, Raster oder gleichmäßig voneinander beabstandet angeordnet sein und/oder das Staubbindemittel aus verschiedenen Richtungen aufgesprüht werden. Es kann auch vorgesehen sein, dass zumindest ein Rotationszerstäuber in die Auflockerungseinheit integriert ist. Beispielsweise kann eine als Auflockerungseinheit verwendete Stachelwalze Rotationszerstäuber zum Aufsprühen des Staubbindemittels aufweisen.

In einer nicht gezeigten Ausführungsform kann die Auflockerungseinheit eine Walze, einen Häcksler, ein Rührwerk, ein Gebläse, eine Bürste oder eine beliebige Kombination dieser aufweisen. Es kann auch vorgesehen sein, dass die Auflockerungseinheit zwei in Zuführrichtung voneinander beabstandete Walzen mit unterschiedlicher Drehgeschwindigkeit aufweist, so dass der faserhaltige Stoff auseinandergezogen und dadurch aufgelockert wird. Ebenso kann vorgesehen sein, dass die Auflockerungseinheit zwei in Zuführrichtung voneinander beabstandete Walzenpaare aufweisend jeweils zwei vertikal übereinander angeordnete Walzen aufweist.

In einer nicht dargestellten Ausführungsform kann die Austrittsöffnung nicht parallel zu der Eintrittsöffnung angeordnet sein. Insbesondere kann die Austrittsöffnung derart angeordnet sein, dass die Auswurfrichtung im Wesentlichen senkrecht zu der Zuführrichtung orientiert ist. Es kann vorgesehen sein, dass der faserhaltige Stoff in vertikaler Richtung nach unten ausgeworfen wird. Es kann vorgesehen sein, dass die Austrittsöffnung eine Trichterform aufweist.

In einer nicht dargestellten Ausführungsform kann die Vorrichtung eine Abscheideeinheit zum Abscheiden von beim Aufsprühen gebildeten Staubpartikelclustern aufweisen, beispielsweise mindestens einen Sauger, Bürste, Wascheinheit oder Kombination dieser. Die Abscheideeinheit kann in Zuführrichtung des faserhaltigen Stoffs hinter der Sprühkammer und/oder der Auswurfeinheit und/oder zwischen Sprühkammer und Auswurfeinheit angeordnet sein.

In einer Ausführungsform kann die Vorrichtung 1 über ein Gestell 12 ortsfest befestigt sein. In einer anderen Ausführungsform kann die Vorrichtung 1 oder das Gestell 12 auf Rädern oder Rollen stehen, so dass die Vorrichtung 1 verschoben werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Vorrichtung zur Behandlung eines faserhaltigen Stoffs
- 2: Faserhaltiger Stoff
- 3: Sprühkammer
- 4: Eintrittsöffnung
- 5: Austrittsöffnung
- 6: Rotationszerstäuber
- 7: Trichter
- 8: Auflockerungseinheit
- 9: Auswurfeinheit
- 10: Auffangbehälter
- 11: Ansteuereinheit
- 12: Gestell
- 13: Getriebe
- 14: Klappe
- 15: Bodensprinkler
- 16: Abfluss
- 17: Behälter
- 18: Auswurföffnungsverstellvorrichtung
- 19: Umlenkstück
- 20: Klappe
- 21: Fangschutz
- 22: Auslauf des Behälters
- 23: Austauschbares Innenvolumen
- 24: Aufnahmevorrichtung
- 25: Magnetventil
- 26: Reduzierstück
- 27: Reservoir
- 28: Verbinder
- 29: Staubabsaugung
- 30: Ventil
- 31: Stellelement
- 32: Anschluss
- 33: Industriestaubsauger
- 34: T-Stück
- 35: Heizelement

## Patentansprüche

1. Vorrichtung (1) zur Behandlung eines faserhaltigen Stoffs, bevorzugt Heu oder Stroh, wobei die Vorrichtung aufweist:
- eine Sprühkammer (3), die eine Eintrittsöffnung (4), eine Austrittsöffnung (5) und mindestens einen zwischen der Eintritts- und Austrittsöffnung (4; 5) angeordneten Rotationszerstäuber (6) zum Zerstäuben und Aufsprühen eines Staubbindemittels auf einen faserhaltigen Stoff (2) aufweist;
- eine Zuführeinheit (7), die dazu eingerichtet ist, den faserhaltigen Stoff (2) durch die Eintrittsöffnung (4) in die Sprühkammer (3) einzuführen; und
- eine Auflockerungseinheit (8) zum Auflockern und/oder Zerkleinern des faserhaltigen Stoffs (2); wobei
die Zuführeinheit (7) als Trichter ausgebildet ist.

2. Vorrichtung (1) nach Anspruch 1, die eine Aufgabeeinheit, vorzugsweise als Heukran ausgeführt, umfasst, die dazu eingerichtet ist, den faserhaltigen Stoff dem Trichter (7) zuzuführen.

3. Vorrichtung (1) nach einem der vorhergehenden Ansprüche, die einen fluidisch mit dem Rotationszerstäuber (6) verbundenen Behälter (17) zur Aufnahme des Staubbindemittels aufweist, wobei der Behälter (17) austauschbar ausgeführt ist oder ausgebildet ist, ein austauschbares Innenvolumen (23) aufzunehmen.

4. Vorrichtung (1) nach Anspruch 3, bei der der Behälter (17) Karton umfasst, vorzugsweise als Bag-in-Box Verpackung ausgebildet ist, und/oder eine Innenseite des Behälters (17) eine flüssigkeitsundurchlässige Beschichtung, insbesondere eine Kunststoffbeschichtung, aufweist, und/oder das austauschbare Innenvolumen (23) als ein Beutel ausgeführt ist, insbesondere als ein Kunststoffbeutel.

5. Vorrichtung (1) nach einem der Ansprüche 3 oder 4, die eine Aufnahmevorrichtung (24) zur Aufnahme des Behälters (17) aufweist, die eingerichtet ist, den Behälter (17) auf oder über der Sprühzone (3) zu positionieren und den Behälter (17) mit dem Rotationszerstäuber (6) fluidisch zu verbinden.

6. Vorrichtung (1) nach Anspruch 5, bei der die Aufnahmevorrichtung (24) ein Heizelement (35) aufweist, das bevorzugt ausgebildet ist, das Staubbindemittel in dem Behälter (17) zu temperieren, vorzugsweise auf eine Temperatur in einem Bereich von 20 bis 25° C.

7. Vorrichtung (1) nach einem der Ansprüche 3 bis 6, die ein Magnetventil (25) und ein Reduzierstück (26) aufweist, wobei das Magnetventil (25) und das Reduzierstück (26) ausgebildet sind, den Behälter (17) und den Rotationszerstäuber (6) fluidisch zu verbinden.

8. Vorrichtung (1) nach Anspruch 7, bei der das Reduzierstück (26) so ausgelegt ist, dass ein Volumenstrom an Staubbindemittel an dem Rotationszerstäuber (6) zwischen 5 und 50 ml Staubbindemittel pro Minute beträgt, bevorzugt zwischen 15 und 40 ml Staubbindemittel pro Minute, besonders bevorzugt zwischen 20 und 30 ml Staubbindemittel pro Minute.

9. Vorrichtung (1) nach einem der Ansprüche 3 bis 8, die einen Verbinder (28) zum Verbinden eines Auslaufs (22) des Behälters (17) mit dem Rotationszerstäuber (6) aufweist, wobei der Verbinder (28) mit dem Auslauf (22) des Behälters (17) kraftschlüssig verbindbar ist und/oder der Verbinder (28) ausgebildet ist, den Auslauf (22) des Behälters (17) zu öffnen.

10. Vorrichtung (1) nach Anspruch 9, bei der der Verbinder (28) ein Stellelement (31) zum kraftschlüssigen Verbinden mit dem Auslauf (22) des Behälters (17) und/oder zum Öffnen des Auslaufs (22) des Behälters (17) aufweist, wobei das Stellelement (31) vorzugsweise als eine Stellschraube oder ein Hebel ausgebildet ist.

11. Vorrichtung (1) nach einem der Ansprüche 3 bis 10, die ein Reservoir (27) aufweist, das mit einem Auslauf (22) des Behälters (17) fluidisch verbindbar ist, und eingerichtet ist, den Auslauf (22) des Behälters (17) mit dem Rotationszerstäuber (6) fluidisch zu verbinden.

12. Vorrichtung (1) nach einem der vorhergehenden Ansprüche, bei der die Vorrichtung (1) eine Staubabsaugung (29) aufweist, die vorzugsweise in Zuführrichtung vor der Sprühzone (3) angeordnet ist und/oder für den Anschluss eines Industriestaubsaugers ausgebildet ist.

13. Verfahren zur Behandlung eines faserhaltigen Stoffs (2) mit einem Staubbindemittel mittels einer Vorrichtung (1) nach einem der Ansprüche 1 bis 12, wobei das Verfahren die Schritte aufweist:
- Bereitstellen eines Staubpartikel aufweisenden faserhaltigen Stoffs (2) und Zuführen des faserhaltigen Stoffs (2) durch die Zuführeinheit (7) der Vorrichtung (1);
- Auflockern des faserhaltigen Stoffs (2) durch die Auflockerungseinheit (8) der Vorrichtung (1); und
- Aufsprühen eines Staubbindemittels in die Sprühkammer (3) der Vorrichtung (1) auf den faserhaltigen Stoff (2), wobei das Staubbindemittel durch den mindestens einen in der Sprühkammer (3) angeordneten Rotationszerstäuber (6) zu Tropfen zerstäubt wird und wobei das Staubbindemittel dazu eingerichtet ist, Staubpartikel an Fasern des faserhaltigen Stoffs (2) zu binden und/oder eine Clusterbildung der Staubpartikel zu begünstigen.

14. Staubbindemittel für eine Vorrichtung nach einem der Ansprüche 1 bis 12 und/oder für ein Verfahren nach Anspruch 13, umfassend ein Enyzm und/oder eine Enzymmischung zum Abbau oder zur Zersetzung von Mykotoxinen, wobei das Enzym und/oder die Enzymmischung vorzugsweise zum Abbau oder zur Zersetzung von mindestens einem aus A-Trichothecene, B-Trichotecene, Fumonisine oder Zerealenon-metaboliten eingerichtet ist.

15. Staubbindemittel nach Anspruch 14, das einen Filmbildner auf wässriger Basis aufweisend Cassia-Gum E 427, Agar-Agar, Carboxy-Methylcellulose oder eine beliebige Kombination dieser umfasst und/oder ein Konservierungsmittel, bevorzugt ein Kaliumsorbat, eine Zitronensäure, einen Zuckerstoff, ein Maltodextrin oder eine beliebige Kombination dergleichen, umfasst und/oder eine Viskosität von 20 - 60 mPas, bevorzugt von 30 - 50 mPas, besonders bevorzugt 35 - 45 mPas, aufweist.

## Geänderte Patentansprüche

### Geänderte Patentansprüche gemäss Regel 137(2) EPÜ.

1. Vorrichtung (1) zur Behandlung eines faserhaltigen Stoffs, bevorzugt Heu oder Stroh, wobei die Vorrichtung aufweist:
- eine Sprühkammer (3), die eine Eintrittsöffnung (4), eine Austrittsöffnung (5) und mindestens einen zwischen der Eintritts- und Austrittsöffnung (4; 5) angeordneten Rotationszerstäuber (6) zum Zerstäuben und Aufsprühen eines Staubbindemittels auf einen faserhaltigen Stoff (2) aufweist;
- eine als Trichter ausgebildete Zuführeinheit (7), die dazu eingerichtet ist, den faserhaltigen Stoff (2) durch die Eintrittsöffnung (4) in die Sprühkammer (3) einzuführen;
- eine Auflockerungseinheit (8) zum Auflockern und/oder Zerkleinern des faserhaltigen Stoffs (2); und
- einen fluidisch mit dem Rotationszerstäuber (6) verbundenen Behälter (17) zur Aufnahme des Staubbindemittels; wobei
der Behälter (17) austauschbar ausgeführt ist oder ausgebildet ist, ein austauschbares Innenvolumen (23) aufzunehmen.

2. Vorrichtung (1) nach Anspruch 1, die eine Aufgabeeinheit, vorzugsweise als Heukran ausgeführt, umfasst, die dazu eingerichtet ist, den faserhaltigen Stoff dem Trichter (7) zuzuführen.

3. Vorrichtung (1) nach Anspruch 1 oder 2, bei der der Behälter (17) Karton umfasst, vorzugsweise als Bag-in-Box Verpackung ausgebildet ist, und/oder eine Innenseite des Behälters (17) eine flüssigkeitsundurchlässige Beschichtung, insbesondere eine Kunststoffbeschichtung, aufweist, und/oder das austauschbare Innenvolumen (23) als ein Beutel ausgeführt ist, insbesondere als ein Kunststoffbeutel.

4. Vorrichtung (1) nach einem der vorhergehenden Ansprüche, die eine Aufnahmevorrichtung (24) zur Aufnahme des Behälters (17) aufweist, die eingerichtet ist, den Behälter (17) auf oder über der Sprühzone (3) zu positionieren und den Behälter (17) mit dem Rotationszerstäuber (6) fluidisch zu verbinden.

5. Vorrichtung (1) nach Anspruch 4, bei der die Aufnahmevorrichtung (24) ein Heizelement (35) aufweist, das bevorzugt ausgebildet ist, das Staubbindemittel in dem Behälter (17) zu temperieren, vorzugsweise auf eine Temperatur in einem Bereich von 20 bis 25° C.

6. Vorrichtung (1) nach einem der vorhergehenden Ansprüche, die ein Magnetventil (25) und ein Reduzierstück (26) aufweist, wobei das Magnetventil (25) und das Reduzierstück (26) ausgebildet sind, den Behälter (17) und den Rotationszerstäuber (6) fluidisch zu verbinden.

7. Vorrichtung (1) nach Anspruch 6, bei der das Reduzierstück (26) so ausgelegt ist, dass ein Volumenstrom an Staubbindemittel an dem Rotationszerstäuber (6) zwischen 5 und 50 ml Staubbindemittel pro Minute beträgt, bevorzugt zwischen 15 und 40 ml Staubbindemittel pro Minute, besonders bevorzugt zwischen 20 und 30 ml Staubbindemittel pro Minute.

8. Vorrichtung (1) nach einem der vorhergehenden Ansprüche, die einen Verbinder (28) zum Verbinden eines Auslaufs (22) des Behälters (17) mit dem Rotationszerstäuber (6) aufweist, wobei der Verbinder (28) mit dem Auslauf (22) des Behälters (17) kraftschlüssig verbindbar ist und/oder der Verbinder (28) ausgebildet ist, den Auslauf (22) des Behälters (17) zu öffnen.

9. Vorrichtung (1) nach Anspruch 8, bei der der Verbinder (28) ein Stellelement (31) zum kraftschlüssigen Verbinden mit dem Auslauf (22) des Behälters (17) und/oder zum Öffnen des Auslaufs (22) des Behälters (17) aufweist, wobei das Stellelement (31) vorzugsweise als eine Stellschraube oder ein Hebel ausgebildet ist.

10. Vorrichtung (1) nach einem der vorhergehenden Ansprüche, die ein Reservoir (27) aufweist, das mit einem Auslauf (22) des Behälters (17) fluidisch verbindbar ist, und eingerichtet ist, den Auslauf (22) des Behälters (17) mit dem Rotationszerstäuber (6) fluidisch zu verbinden.

11. Vorrichtung (1) nach einem der vorhergehenden Ansprüche, bei der die Vorrichtung (1) eine Staubabsaugung (29) aufweist, die vorzugsweise in Zuführrichtung vor der Sprühzone (3) angeordnet ist und/oder für den Anschluss eines Industriestaubsaugers ausgebildet ist.

12. Verfahren zur Behandlung eines faserhaltigen Stoffs (2) mit einem Staubbindemittel mittels einer Vorrichtung (1) nach einem der Ansprüche 1 bis 11, wobei das Verfahren die Schritte aufweist:
- Bereitstellen eines Staubpartikel aufweisenden faserhaltigen Stoffs (2) und Zuführen des faserhaltigen Stoffs (2) durch die Zuführeinheit (7) der Vorrichtung (1);
- Auflockern des faserhaltigen Stoffs (2) durch die Auflockerungseinheit (8) der Vorrichtung (1); und
- Aufsprühen eines Staubbindemittels in die Sprühkammer (3) der Vorrichtung (1) auf den faserhaltigen Stoff (2), wobei das Staubbindemittel durch den mindestens einen in der Sprühkammer (3) angeordneten Rotationszerstäuber (6) zu Tropfen zerstäubt wird und wobei das Staubbindemittel dazu eingerichtet ist, Staubpartikel an Fasern des faserhaltigen Stoffs (2) zu binden und/oder eine Clusterbildung der Staubpartikel zu begünstigen.

13. Verwendung eines Staubbindemittels in einer Vorrichtung nach einem der Ansprüche 1 bis 11 und/oder in einem Verfahren nach Anspruch 12, umfassend ein Enyzm und/oder eine Enzymmischung zum Abbau oder zur Zersetzung von Mykotoxinen, wobei das Enzym und/oder die Enzymmischung vorzugsweise zum Abbau oder zur Zersetzung von mindestens einem aus A-Trichothecene, B-Trichotecene, Fumonisine oder Zerealenon-metaboliten eingerichtet ist.

14. Verwendung nach Anspruch 13, bei der das Staubbindemittel einen Filmbildner auf wässriger Basis aufweisend Cassia-Gum E 427, Agar-Agar, CarboxyMethylcellulose oder eine beliebige Kombination dieser umfasst und/oder ein Konservierungsmittel, bevorzugt ein Kaliumsorbat, eine Zitronensäure, einen Zuckerstoff, ein Maltodextrin oder eine beliebige Kombination dergleichen, umfasst und/oder eine Viskosität von 20 - 60 mPas, bevorzugt von 30 - 50 mPas, besonders bevorzugt 35 - 45 mPas, aufweist.
